(19)

Europäisches Patentamt

European Patent Office

Office européen des brevets

(11) **EP 4 567 724 A1**

(12) **EUROPEAN PATENT APPLICATION**
published in accordance with Art. 153(4) EPC

(43) Date of publication:
**11.06.2025  Bulletin 2025/24**

(21) Application number: **23899677.1**

(22) Date of filing: **06.11.2023**

(51) International Patent Classification (IPC):
**G06T 7/00** (2017.01)

(52) Cooperative Patent Classification (CPC):
**G06T 17/00; G06T 17/20;** G06T 2210/56

(86) International application number:
**PCT/CN2023/129915**

(87) International publication number:
**WO 2024/120096 (13.06.2024 Gazette 2024/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.12.2022  CN 202211576832**

(71) Applicant: **Tencent Technology (Shenzhen) Company Limited**
**Shenzhen, Guangdong 518057 (CN)**

(72) Inventor: **QIU, Weibin**
**Shenzhen, Guangdong 518057 (CN)**

(74) Representative: **Gunzelmann, Rainer**
**Wuesthoff & Wuesthoff**
**Patentanwälte und Rechtsanwalt PartG mbB**
**Schweigerstraße 2**
**81541 München (DE)**

(54) **KEY POINT DETECTION METHOD, TRAINING METHOD AND APPARATUS, ELECTRONIC DEVICE, COMPUTER-READABLE STORAGE MEDIUM, AND COMPUTER PROGRAM PRODUCT**

(57)     The present application provides a key point detection method, training method and apparatus, a device, a medium, and a product, which are applied in the technical field of artificial intelligence. The method comprises: obtaining a three-dimensional mesh for characterizing an object to be detected, and determining vertices of the three-dimensional mesh and connection relationships between the vertices; performing feature extraction on the vertices of the three-dimensional mesh, and obtaining a vertex feature; on the basis of the vertex feature, performing global feature extraction on the object to be detected to obtain a global feature, and on the basis of the vertex feature and the connection relationships between the vertices, performing local feature extraction on the object to be detected to obtain a local feature; and by combining the vertex feature, the global feature, and the local feature, detecting a key point of the object to be detected, and obtaining the position of the key point of the object to be detected on the object to be detected.

| A server obtains a three-dimensional mesh representing a to-be-detected object, and determines vertices of the three-dimensional mesh and a connection relationship between the vertices | 101 |
| Perform feature extraction on the vertices of the three-dimensional mesh, to obtain a vertex feature of the three-dimensional mesh | 102 |
| Perform global feature extraction on the to-be-detected object using the vertex feature, to obtain a global feature of the to-be-detected object, and perform local feature extraction on the to-be-detected object using the vertex feature and the connection relationship between the vertices, to obtain a local feature of the to-be-detected object | 103 |
| Perform detection on a key point of the to-be-detected object using the vertex feature, the global feature, and the local feature, to obtain a position of the key point of the to-be-detected object on the to-be-detected object | 104 |

**FIG. 3**

**Description**

RELATED APPLICATION

Embodiments of the present disclosure are based upon and claims priority to Chinese Patent Application No. 202211576832.9, filed on December 09, 2022, which is incorporated herein by reference in its entirety.

FIELD OF THE TECHNOLOGY

The present disclosure relates to the field of artificial intelligence technologies, and in particular, to a method for detecting a keypoint of a to-be-detected object, a training method, an apparatus, an electronic device, a computer-readable storage medium, and a computer program product.

BACKGROUND OF THE DISCLOSURE

In the related art, keypoint detection of a three-dimensional face character is generally divided into two general types. The first general type is a method based on traditional geometric analysis, and the second general type is a method based on deep learning. For the first type of method, a keypoint positioning method based on the geometric analysis relies on manually set rules, and is difficult to be applied to head models of different forms. Therefore, robustness of the method is poor. However, for the second type of method, basically, a three-dimensional head model is first rendered into two-dimensional images, and then a two-dimensional convolutional neural network is used to extract a feature, to detect a corresponding keypoint. As a result, three-dimensional geometric information is inevitably lost. Based on this, accuracy of the keypoint detection of the three-dimensional face character in the related art is low.

SUMMARY

The embodiments of the present disclosure provide a method for detecting a keypoint of a to-be-detected object, a method for training a three-dimensional network model, an apparatus, an electronic device, a computer-readable storage medium, and a computer program product, to improve accuracy of performing keypoint detection through a three-dimensional network model.
Technical solutions of the embodiments of the present disclosure are implemented as follows.
An embodiment of the present disclosure provides a method for detecting a keypoint of a to-be-detected object, including:

obtaining a three-dimensional mesh representing the to-be-detected object, and determining vertices of the three-dimensional mesh and a connection relationship between the vertices;

performing feature extraction on the vertices of the three-dimensional mesh, to obtain a vertex feature of the three-dimensional mesh;

performing global feature extraction on the to-be-detected object based on the vertex feature, to obtain a global feature of the to-be-detected object, and performing local feature extraction on the to-be-detected object based on the vertex feature and the connection relationship between the vertices, to obtain a local feature of the to-be-detected object; and

performing feature splicing based on the vertex feature, the global feature, and the local feature, and performing detection on a keypoint of the to-be-detected object, to obtain a position of the keypoint of the to-be-detected object on the to-be-detected object.

An embodiment of the present disclosure provides an apparatus for detecting a keypoint of a to-be-detected object, including:

an obtaining module, configured to obtain a three-dimensional mesh representing the to-be-detected object, and determine vertices of the three-dimensional mesh and a connection relationship between the vertices;

a first feature extraction module, configured to perform feature extraction on the vertices of the three-dimensional mesh, to obtain a vertex feature of the three-dimensional mesh;

a second feature extraction module, configured to perform global feature extraction on the to-be-detected object based on the vertex feature, to obtain a global feature of the to-be-detected object, and perform local feature extraction on the to-be-detected object based on the vertex feature and the connection relationship between the vertices, to obtain a local feature of the to-be-detected object; and

an output module, configured to perform detection on a keypoint of the to-be-detected object based on the vertex feature, the global feature, and the local feature, to obtain a position of the keypoint of the to-be-detected object on the to-be-detected object.

An embodiment of the present disclosure provides a method for training a three-dimensional network model. The three-dimensional network model includes at least a first feature extraction layer, a second feature extraction layer, a third feature extraction layer, and an output layer. The method includes:

acquiring an object training sample carrying a label, where the label indicates a real position of a keypoint of the object training sample;

obtaining a training three-dimensional mesh configured for representing the object training sample, and determining vertices of the training three-dimensional mesh and a connection relationship between the vertices;

performing feature extraction on the vertices of the object training sample via the first feature extraction layer, to obtain a vertex feature of the training three-dimensional mesh;

performing global feature extraction on the object training sample based on the vertex feature of the training three-dimensional mesh via the second feature extraction layer, to obtain a global feature of the object training sample, and performing local feature extraction on the object training sample based on the vertices of the training three-dimensional mesh and the connection relationship between the vertices via the third feature extraction layer, to obtain a local feature of the object training sample;

performing detection on the keypoint of the object training sample via the output layer based on the vertex feature of the training three-dimensional mesh, the global feature of the object training sample, and the local feature of the object training sample, to obtain a position of the keypoint of the object training sample on the object training sample; and

acquiring a difference between the position of the keypoint of the object training sample and the label, and training the three-dimensional network model based on the difference, to obtain a target three-dimensional network model, the target three-dimensional network model being configured for detecting a keypoint of a to-be-detected object, to obtain a position of the keypoint of the to-be-detected object on the to-be-detected object.

An embodiment of the present disclosure provides an apparatus for training a three-dimensional network model. The three-dimensional network model includes at least a first feature extraction layer, a second feature extraction layer, a third feature extraction layer, and an output layer. The apparatus includes:

an acquiring module, configured to acquire an object training sample carrying a label, where the label indicates a real position of a keypoint of the object training sample;

an obtaining module, configured to obtain a training three-dimensional mesh configured for representing the object training sample, and determine vertices of the training three-dimensional mesh and a connection relationship between the vertices;

a first feature extraction module, configured to perform feature extraction on the vertices of the object training sample via the first feature extraction layer, to obtain a vertex feature of the training three-dimensional mesh;

a second feature extraction module, configured to perform global feature extraction on the object training sample based on the vertex feature of the training three-dimensional mesh via the second feature extraction layer, to obtain a global feature of the object training sample, and perform local feature extraction on the object training sample based on the vertices of the training three-dimensional mesh and the connection relationship between the vertices via the third feature extraction layer, to obtain a local feature of the object training sample;

an output module, configured to perform detection on the keypoint of the object training sample via the output layer based on the vertex feature of the training three-dimensional mesh, the global feature of the object training sample, and the local feature of the object training sample, to obtain a position of the keypoint of the object training sample on the object training sample; and

an update module, configured to acquire a difference between the position of the keypoint of the object training sample and the label, and train the three-dimensional network model based on the difference, to obtain a target three-dimensional network model, the target three-dimensional network model being configured for detecting a keypoint of a to-be-detected object, to obtain a position of the keypoint of the to-be-detected object on the to-be-detected object.

An embodiment of the present disclosure provides an electronic device, including:

a memory, configured to store executable instructions; and

a processor, configured to implement, when executing the computer-executable instructions stored in the memory, the method for detecting a keypoint of a to-be-detected object according to the embodiments of the present disclosure.

An embodiment of the present disclosure provides an electronic device, including:

a memory, configured to store executable instructions; and

a processor, configured to implement, when executing the computer-executable instructions stored in the memory, the method for training a three-dimensional network model according to the embodiments of the present disclosure.

An embodiment of the present disclosure provides a computer-readable storage medium, having computer-executable instructions stored therein. The computer-executable instructions, when executed by a processor, cause the processor to perform the method for detecting a keypoint of a to-be-detected object according to the embodiments of the present disclosure.

An embodiment of the present disclosure provides a computer-readable storage medium, having computer-executable instructions stored therein. The computer-executable instructions, when executed by a processor, cause the processor to perform the method for training a three-dimensional network model according to the embodiments of the present disclosure.

An embodiment of the present disclosure provides a computer program product. The computer program product includes a computer program or computer-executable instructions. The computer program or the computer-executable instructions are stored in a computer-readable storage medium. A processor of an electronic device reads the computer program or the computer-executable instructions from the computer-readable storage medium, and the processor executes the computer program or the computer-executable instructions, so that the electronic device performs the method for detecting a keypoint of a to-be-detected object according to the embodiments of the present disclosure.

An embodiment of the present disclosure provides a computer program product. The computer program product includes a computer program or computer-executable instructions. The computer program or the computer-executable instructions are stored in a computer-readable storage medium. A processor of an electronic device reads the computer program or the computer-executable instructions from the computer-readable storage medium, and the processor executes the computer program or the computer-executable instructions, so that the electronic device performs the method for training a three-dimensional network model according to the embodiments of the present disclosure.

The embodiments of the present disclosure have the following beneficial effects:

A three-dimensional mesh corresponding to a to-be-detected object is obtained, a global feature and a local feature of the to-be-detected object are separately extracted through construction of a dual-path feature extraction layer based on a vertex feature and a connection relationship between vertices obtained by using the three-dimensional mesh, and then a position of a keypoint on the to-be-detected object is obtained based on the vertex feature obtained by using the three-dimensional mesh and the global feature and the local feature obtained through extraction. **In** this way, richer feature information of the to-be-detected object is extracted via a plurality of feature extraction layers, and then detection is performed on the keypoint of the to-be-detected object based on the rich feature information, so that accuracy of three-dimensional keypoint detection is significantly improved.

BRIEF DESCRIPTION OF THE DRAWINGS

FIG. 1 is a schematic architectural diagram of a keypoint detection system 100 according to an embodiment of the present disclosure.

FIG. 2 is a schematic structural diagram of an electronic device according to an embodiment of the present disclosure.

FIG. 3 is a schematic flowchart of a method for detecting a keypoint of a to-be-detected object according to an embodiment of the present disclosure.

FIG. 4 is a schematic diagram of a three-dimensional mesh of a human head according to an embodiment of the present disclosure.

FIG. 5 is a schematic flowchart of determining a local feature of each vertex according to an embodiment of the present disclosure.

FIG. 6 is a schematic diagram of determining a correlation degree between a reference vertex and another vertex by using an attention mechanism according to an embodiment of the present disclosure.

FIG. 7 is a schematic diagram of positions of keypoints on a to-be-detected object according to an embodiment of the present disclosure.

FIG. 8 is a schematic structural diagram of a three-dimensional network model according to an embodiment of the present disclosure.

FIG. 9 is a schematic structural diagram of a third feature extraction layer according to an embodiment of the present disclosure.

FIG. 10 is a schematic structural diagram of a three-dimensional network model according to an embodiment of the present disclosure.

FIG. 11 is a schematic flowchart of a training process of a three-dimensional network model according to an embodiment of the present disclosure.

FIG. 12 is a schematic diagram of patch simplification of a three-dimensional mesh according to an embodiment of the present disclosure.

FIG. 13 is a schematic diagram of patch densification of a three-dimensional mesh according to an embodiment of the present disclosure.

FIG. 14 is a schematic flowchart of a method for detecting a keypoint of a to-be-detected object according to an embodiment of the present disclosure.

FIG. 15 is a schematic structural diagram of a graph convolutional neural network according to an embodiment of the present disclosure.

FIG. 16 is a comparison diagram of a geodesic distance and a Euclidean distance according to an embodiment of the present disclosure.

DESCRIPTION OF EMBODIMENTS

To make objectives, technical solutions, and advantages of the present disclosure clearer, the following further describes the embodiments of the present disclosure in detail with reference to the accompanying drawings. The described embodiments are not to be considered as a limitation to the embodiments of the present disclosure. All other embodiments obtained by a person of ordinary skill in the art without creative efforts shall fall within the protection scope of the present disclosure.

In the following descriptions, the term "some embodiments" describes subsets of all possible embodiments, but "some embodiments" may be the same subset or different subsets of all possible embodiments, and can be combined with each other without conflict.

In the following descriptions, the terms "first", "second", and "third" are merely for distinguishing between similar objects rather than representing a specific order of the objects. A specific order or a sequence of "first", "second", and "third" is interchangeable in proper circumstances, so that the embodiments of the present disclosure described herein can be implemented in an order other than that is illustrated or described herein.

Unless otherwise defined, meanings of all technical and scientific terms used in this specification are the same as those usually understood by a person skilled in the art to which the present disclosure belongs. Terms used in this specification are merely intended to describe the objectives of the embodiments of the present disclosure, but are not intended to limit the present disclosure.

Before the embodiments of the present disclosure are further described in detail, nouns and terms in the embodiments of the present disclosure are described, and the nouns and the terms in the embodiments of the present disclosure are applicable to the following explanations.

(1) Three-dimensional mesh: A three-dimensional mesh is a manifold surface having a topology structure, for example, a spherical surface divided into a combination of a plurality of vertices and a plurality of sides. In the present disclosure, the three-dimensional mesh may be a three-dimensional face mesh. Herein, the three-dimensional mesh is a graph structure. The term "mesh" herein can be understood as "mesh model". That is, the "mesh" in the present disclosure can be replaced by "mesh model".

(2) Client: A client is a program that corresponds to a server and that provides a local service for a user. Except for some applications that can only be run locally, the client is generally installed on an ordinary client machine, and needs to be run in cooperation with the server. In other words, a corresponding server and service program need to exist in a network to provide a corresponding service. Therefore, a specific communication connection needs to be established between the client and the server, to ensure normal running of the application.

(3) Three-dimensional face keypoint detection: Three-dimensional face keypoint detection means detecting three-dimensional coordinates of a series of face keypoints with preset semantics given any three-dimensional face mesh model. Quantities of vertices and patches of the three-dimensional face model are not limited. The keypoint with the preset semantic refers to position information of a canthus, a corner of the mouth, a nose tip, a face contour, and the like. The semantic of the keypoint and a quantity of keypoints are determined by a specific task.

(4) Graph neural network (GNN): A GNN is a type of artificial neural network, and is configured for processing data that may be represented as a graph. In comparison with a conventional two-dimensional convolutional neural network acting on a two-dimensional image, the graph neural network expands an acting object into graph data that can be represented in a three-dimensional mesh morphology. A key design element of the graph neural network is to use message pairs for transferring, so that a graph node is iteratively updated by exchanging information with a neighbor of the graph node.

(5) Loss: A loss is configured for measuring a difference between an actual result and a target result of a model, to perform model training and optimization.

(6) Three-dimensional heatmap regression: Three-dimensional heatmap regression means that: A graph neural network uses a heatmap as an output layer, forms a regression loss in combination with a standard heatmap, the neural network is trained through forward propagation and gradient backhaul, so that an output of the neural network is fitted with a label, and keypoint coordinates are finally calculated based on the heatmap.

(7) Three-dimensional (3D) scanner: A 3D scanner is a scientific instrument configured to detect and analyze a shape (geometric structure) and appearance data (characteristics such as a color and a surface albedo) of an object or an environment in the real world. Collected data is usually configured for performing three-dimensional reconstruction calculation, to create digital models of actual objects in the virtual world. These models have a wide range of applications, such as industrial design, defect detection, reverse engineering, robot guidance, landscape measurement, medical information, biological information, and criminal identification.

(8) Multi-layer perceptron (MLP): A multi-layer perceptron is an artificial neural network with a forward structure for mapping a group of input vectors to a group of output vectors. The MLP may be considered as a directed graph, and is formed by a plurality of node layers. Each layer is fully connected to a next layer. Each node other than an input node is a neuron (or referred to as a processing unit) with a non-linear activation function.

(9) Convolutional neural network (CNN): A convolutional neural network is a feedforward neural network, generally formed by one or more convolutional layers (network layers that use convolutional mathematical operation) and a fully connected layer at an end. A neuron inside the network may respond to some regions of an input image, and generally have excellent performance in the field of visual image processing.

(10) Machine learning (ML): Machine learning is a multi-field interdiscipline, and relates to a plurality of disciplines such as the probability theory, statistics, the approximation theory, convex analysis, and the algorithm complexity theory. The machine learning specializes in studying how a computer simulates or implements a human learning behavior to acquire new knowledge or skills, and reorganize an existing knowledge structure, to keep improving its performance. The machine learning is the core of artificial intelligence, is a basic way to make the computer intelligent, and is applied to various fields of the artificial intelligence. The machine learning and deep learning generally include technologies such as an artificial neural network, a belief network, reinforcement learning, transfer learning, inductive learning, and learning from demonstrations.

(11) Point cloud data: Point cloud data is a set of massive points of a surface feature of a target, and is generally obtained through laser measurement or photogrammetry. Point cloud data obtained through laser measurement includes three-dimensional coordinates and laser reflection intensity. Such point cloud data is usually used to determine a state of an object based on an echo characteristic and reflection intensity. Point cloud data obtained through photogrammetry usually includes three-dimensional coordinates and color information.

(12) Graph attention network (GAT): A GAT is a new neural network architecture based on graph structural data.

As the artificial intelligence technology is researched and advanced, researches and applications of the artificial intelligence technology are carried out in a plurality of fields, such as common smart homes, smart wearing devices, virtual assistants, smart speakers, smart marketing, unmanned driving, autonomous driving, drones, robots, smart medicine, and smart customer service. It is believed that as the technology develops, the artificial intelligence technology is to be applied in more fields and play an increasingly important role.

The solutions provided in the embodiments of the present disclosure relate to a technology such as a three-dimensional network model of artificial intelligence, and may also be applied to fields such as a cloud technology and Internet of vehicles. Details are specifically described in the following embodiments.

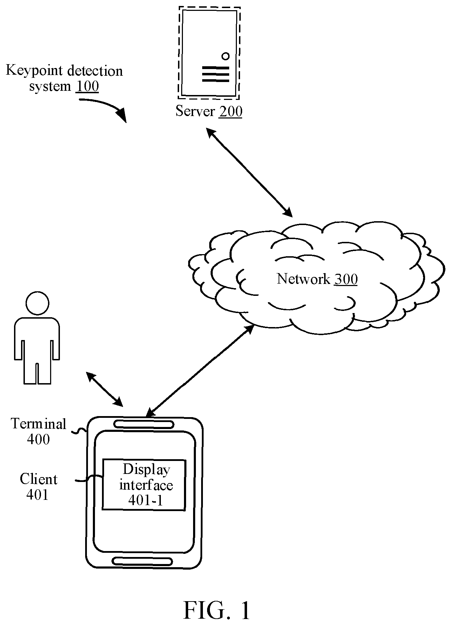

Referring to FIG. 1, FIG. 1 is a schematic architectural diagram of a keypoint detection system 100 according to an embodiment of the present disclosure. To implement an application scenario of keypoint detection (for example, the application scenario of the keypoint detection may be: When the keypoint detection is performed on a face, three-dimensional scanning is first performed on the face by using a three-dimensional scanner, and then a position of a keypoint on the face based on three-dimensional scan data is detected), a terminal (for example, a terminal 400 is shown) is connected to a server 200 via a network 300. The network 300 may be a wide area network, a local area network, or a combination thereof. The terminal 400 is configured for a user to perform display on a display interface (for example, a display interface 401-1 is shown) by using a client 401. The terminal 400 and the server 200 are connected to each other via the wired or wireless network.

The terminal 400 is configured to acquire three-dimensional scan data corresponding to a to-be-detected object and send the three-dimensional scan data to the server 200.

The server 200 is configured to: receive the three-dimensional scan data; obtain, based on the three-dimensional scan data, a three-dimensional mesh configured for representing the to-be-detected object, and determine vertices of the three-dimensional mesh and a connection relationship between the vertices; perform feature extraction on the vertices of the three-dimensional mesh, to obtain a vertex feature of the three-dimensional mesh; perform global feature extraction on the to-be-detected object based on the vertex feature, to obtain a global feature of the to-be-detected object, and perform local feature extraction on the to-be-detected object based on the vertex feature and the connection relationship between the vertices, to obtain a local feature of the to-be-detected object; performing detection on a keypoint of the to-be-detected object based on the vertex feature, the global feature, and the local feature, to obtain a position of the keypoint of the to-be-detected object on the to-be-detected object; and send the position of the keypoint on the to-be-detected object to the terminal 400.

The terminal 400 is further configured to display, based on the display interface, the position of the keypoint on the to-be-detected object.

In some embodiments, the server 200 may be an independent physical server, may be a server cluster formed by a plurality of physical servers or a distributed system, or may be a cloud server that provides basic cloud computing services such as a cloud service, a cloud database, cloud computing, a cloud function, cloud storage, a network service, cloud communication, a middleware service, a domain name service, a security service, a content delivery network (CDN), and a big data and artificial intelligence platform. The terminal 400 may be a smartphone, a tablet computer, a notebook computer, a desktop computer, a set-top box, a smart voice interaction device, a smart home appliance, an in-vehicle terminal, an aircraft, a mobile device (for example, a mobile phone, a portable music player, a personal digital assistant, a dedicated message device, a portable game device, a smart speaker, and a smartwatch), or the like, but is not limited thereto. The terminal device and the server may be directly or indirectly connected in a wired or wireless communication manner. This is not limited in the embodiments of the present disclosure.

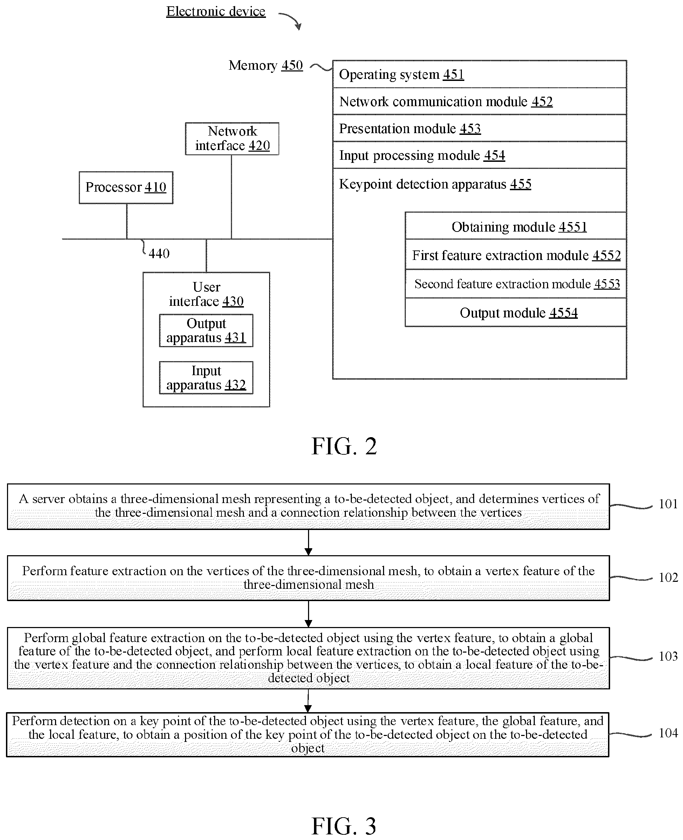

Referring to FIG. 2, FIG. 2 is a schematic structural diagram of an electronic device according to an embodiment of the present disclosure. During actual application, the electronic device may be the server 200 or the terminal 400 shown in FIG. 1. Referring to FIG. 2, the electronic device shown in FIG. 2 includes: at least one processor 410, a memory 450, at least one network interface 420, and a user interface 430. All components in the terminal 400 are coupled together by using a bus system 440. The bus system 440 is configured to implement connection and communication between the components. In addition to a data bus, the bus system 440 further includes a power bus, a control bus, and a state signal bus. However, for ease of clear description, all types of buses are marked as the bus system 440 in FIG. 2.

The processor 410 may be an integrated circuit chip having a signal processing capability, for example, a general processor, a digital signal processor (DSP), another programmable logic device, a discrete gate or a transistor logic device, a discrete hardware component, or the like. The general processor may be a microprocessor or any regular processor or the like.

The user interface 430 includes one or more output apparatuses 431 that enable media content to be presented, and the output apparatuses 431 include one or more speakers and/or one or more visual displays. The user interface 430 further includes one or more input apparatuses 432, and the input apparatuses 432 include a user interface component that helps user input, for example, a keyboard, a mouse, a microphone, a touch display, a camera, or another input button or control.

The memory 450 may be a removable memory, a non-removable memory, or a combination thereof. Exemplary hardware devices include a solid-state memory, a hard disk drive, an optical disk drive, and the like. In some embodiments, the memory 450 includes one or more storage devices physically located away from the processor 410.

The memory 450 includes a volatile memory or a non-volatile memory, or may include both a volatile memory and a non-volatile memory. The non-volatile memory may be a read-only memory (ROM), and the volatile memory may be a random access memory (RAM). The memory 450 described in this embodiment of the present disclosure aims to include any suitable type of memory.

In some embodiments, the memory 450 can store data to support various operations. Examples of the data include a program, a module, a data structure, or a subset or a superset thereof, which are described below by way of example.

An operating system 451 includes system programs configured to process various basic system services and execute a hardware-related task, for example, a frame layer, a core library layer, and a drive layer, configured to implement various basic services and process the hardware-based task.

A network communication module 452 is configured to reach another electronic device through the one or more (wired or wireless) network interfaces 420. Exemplary network interfaces 420 include: Bluetooth, wireless fidelity (Wi-Fi), a universal serial bus (USB), and the like.

A presentation module 453 is configured to enable, through the one or more output apparatuses 431 (for example, a display screen and a speaker) associated with the user interface 430, information to be presented (for example, configured to operate a peripheral device and a user interface displaying content and information).

An input processing module 454 is configured to detect user input or interaction from the one or more input apparatuses 432 and translate the detected input or interaction.

In some embodiments, the apparatus provided in the embodiments of the present disclosure may be implemented in a software manner. FIG. 2 shows a keypoint detection apparatus 455 stored in the memory 450. The keypoint detection apparatus 455 may be software in a form of a program, a plug-in, or the like, including the following software modules: an obtaining module 4551, a first feature extraction module 4552, a second feature extraction module 4553, and an output module 4554. These modules are logical, and therefore may be arbitrarily combined or further divided based on an implemented function. Functions of the modules are described below.

In some other embodiments, the apparatus provided in the embodiments of the present disclosure may be implemented in a hardware manner. In an example, the keypoint detection apparatus provided in the embodiments of the present disclosure may be a processor in a form of a hardware decoding processor, and the processor is programed to perform a keypoint detection method provided in the embodiments of the present disclosure. For example, the processor in the form of the hardware decoding processor may be implemented by using one or more application-specific integrated circuits (ASIC), a DSP, a programmable logic device (PLD), a complex programmable logic device (CPLD), a field programmable gate array (FPGA), or another electronic element.

In some embodiments, the terminal or the server may implement the keypoint detection method provided in the embodiments of the present disclosure by running a computer program. For example, the computer program may be a native program or a software module in the operating system; may be a native application (APP), namely, a program that needs to be installed in the operating system to run, such as an instant messaging APP or a web browser APP; may be an applet, namely, a program that only needs to be downloaded into a browser environment to run; or may be an applet that can be embedded into any APP. In summary, the foregoing computer program may be any form of an application, a module, or a plug-in.

Based on the foregoing descriptions of the keypoint detection system and the electronic device provided in the embodiments of the present disclosure, the keypoint detection method provided in the embodiments of the present disclosure is described below. During actual implementation, the keypoint detection method provided in the embodiments of the present disclosure may be implemented by a terminal or a server separately, or by the terminal and the server together. An example in which the server 200 in FIG. 1 independently performs the keypoint detection method provided in the embodiments of the present disclosure is used for description. Referring to FIG. 3, FIG. 3 is a schematic flowchart of a keypoint detection method according to an embodiment of the present disclosure. Operations shown are described below with reference to FIG. 3.

At 101: A server obtains a three-dimensional mesh configured for representing a to-be-detected object, and determines vertices of the three-dimensional mesh and a connection relationship between the vertices.

During actual implementation, obtaining a three-dimensional mesh configured for representing a to-be-detected object may be directly receiving a three-dimensional mesh of a to-be-detected object sent by another device, or may be implemented by using point cloud data (namely, three-dimensional scan data) corresponding to the to-be-detected object. Herein, the point cloud data indicates a set of massive points of a surface feature of the to-be-detected object, and may generally be obtained through laser measurement or photogrammetry. Specifically, the point cloud data corresponding to the to-be-detected object is first acquired, and then the three-dimensional mesh configured for representing the to-be-detected object is obtained based on the point cloud data, in other words, the three-dimensional mesh corresponding to the to-be-detected object is constructed. Herein, there are a plurality of manners of acquiring the point cloud data corresponding to the to-be-detected object. The point cloud data may be prestored locally in a terminal, may be acquired from the outside world (such as the Internet), or may be collected in real time, for example, collected in real time by using a three-dimensional scanning apparatus such as a three-dimensional scanner.

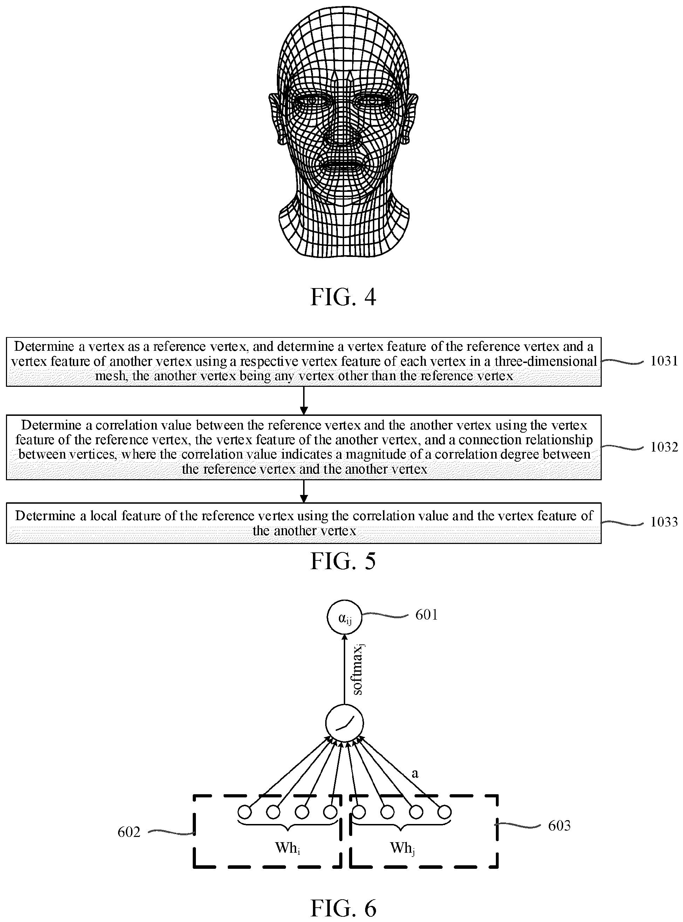

In some embodiments, when the point cloud data is collected in real time by using the three-dimensional scanning apparatus such as the three-dimensional scanner, a process of constructing the three-dimensional mesh corresponding to the to-be-detected object specifically includes: scanning the to-be-detected object by using the three-dimensional scanning apparatus, to obtain point cloud data of a geometric surface of the to-be-detected object; and constructing the three-dimensional mesh corresponding to the to-be-detected object based on the point cloud data. For example, referring to FIG. 4, FIG. 4 is a schematic diagram of a three-dimensional mesh of a human head according to an embodiment of the present disclosure. Based on FIG. 4, when the to-be-detected object is a face, the three-dimensional scanner performs three-dimensional scanning on the human head, to obtain point cloud data corresponding to the head; and the three-dimensional mesh corresponding to the head is constructed based on the point cloud data.

A process of constructing the three-dimensional mesh corresponding to the to-be-detected object based on the point cloud data may be as follows: First, the point cloud data is preprocessed to obtain target point cloud data. The preprocessing includes operations such as filtering, denoising, and point cloud registration. Herein, the filtering may remove noise points, the denoising may further reduce noise and invalid points, and the point cloud registration may align the point cloud data into a same coordinate system. Then, mesh reconstruction is performed on the target point cloud data, to obtain the three-dimensional mesh. The mesh reconstruction is a process of transforming discrete target point cloud data into a three-dimensional mesh. Commonly used mesh reconstruction algorithms include a mesh-based method, a voxel-based method, an implicit function-based method, and the like. Herein, the mesh-based method is to transform the target point cloud data into a triangular mesh, the voxel-based method is to transform the target point cloud data into a voxel mesh, and the implicit function-based method is to use a data function to represent the three-dimensional mesh.

In the embodiments of the present disclosure, data related to real-time scanning or the like is included. When the embodiments of the present disclosure are applied to a specific product or technology, user permission or consent needs to be obtained, and collection, use, and processing of relevant data need to comply with relevant laws, regulations, and standards of relevant countries and regions.

In a three-dimensional mesh model, vertices are the most fundamental units (basic points) that define the geometric shape and structure of the three-dimensional mesh model. These vertices are connected by edges to constitute the topological structure of the three-dimensional mesh model. The vertices are connected to form polygons (such as triangles or quadrilaterals), and these polygons are combined to form the surface of the three-dimensional mesh model. The three-dimensional mesh model involved in the present disclosure can be understood as a Graph structure. A Graph structure is a data structure G(V, E) composed of a set of vertices and the connections between them, where V represents the set of nodes (vertices) in the Graph, and E represents the set of edges (connections between nodes/vertices) in the Graph. Therefore, after obtaining the three-dimensional mesh model (i.e., Graph structure), it is easy to determine the vertices and the connections between them based on the G (V, E) corresponding to the three-dimensional mesh model. During actual implementation, the connection relationship between the vertices of the three-dimensional mesh may be an inter-vertex connection relationship matrix, which indicates whether there is an association between the vertices. A size of the matrix is N*N, and a value of the matrix is 0 or 1. N herein is a quantity of vertices. When a vertex i is connected to a vertex j, a connection relationship $A_{ij}$ between the two vertices is 1, or otherwise, is 0.

For example, on a face, there is a connection relationship between vertices of a three-dimensional mesh configured for indicating a position of an eye, and there is no connection relationship between a vertex of the three-dimensional mesh configured for indicating the position of the eye and a vertex of a three-dimensional mesh for indicating a position of a chin.

At 102: Perform feature extraction on the vertices of the three-dimensional mesh, to obtain a vertex feature of the three-dimensional mesh.

During actual implementation, the feature extraction is performed on the vertices of the three-dimensional mesh, to obtain the vertex feature of the three-dimensional mesh. The vertex feature includes positions of the corresponding vertices and information about corresponding positions indicated by the corresponding vertices on a face. For example, the vertex feature herein may be $N*(6+X)$, where N represents a quantity of vertices corresponding to the three-dimensional mesh; 6 represents dimensions occupied by vertex coordinates and a normal vector, to be specific, six direction dimensions corresponding to three coordinate dimensions of vertex coordinates (x, y, z); and X includes other characteristics of the vertices of the three-dimensional mesh, to be specific, the information about the corresponding positions indicated by the corresponding vertices on the face, such as a curvature and texture information. These other characteristics may be adjusted based on different data and tasks. In this way, when the present disclosure is applied to a model, in a training phase of the model, these other characteristics are added to improve learning efficiency of the model.

At 103: Perform global feature extraction on the to-be-detected object based on the vertex feature, to obtain a global feature of the to-be-detected object, and perform local feature extraction on the to-be-detected object based on the vertex feature and the connection relationship between the vertices, to obtain a local feature of the to-be-detected object.

After determining the connection relationship between the vertices of the three-dimensional mesh and the vertex feature of the three-dimensional mesh, the global feature extraction and the local feature extraction are separately performed on the to-be-detected object, to obtain the global feature and the local feature of the to-be-detected object.

**In** some embodiments, a process of performing global feature extraction on the to-be-detected object based on the vertex feature to obtain the global feature of the to-be-detected object may be: first performing feature extraction on the to-be-detected object based on the vertex feature; performing max pooling processing on an extracted feature, to obtain a max pooling feature, so that all vertices share the max pooling feature; and using the max pooling feature as the global feature of the to-be-detected object.

**In** some embodiments, a process of performing local feature extraction on the to-be-detected object based on the vertex feature and the connection relationship between the vertices to obtain the local feature of the to-be-detected object may be: determining a local feature of each vertex based on the vertex feature and the connection relationship between the vertices; and determining the local feature of the to-be-detected object based on the local feature of each vertex.

Herein, the global feature indicates overall features of the to-be-detected object, such as a color feature, a texture feature, and a shape feature of the to-be-detected object, and the local feature indicates detailed features of the to-be-detected object, in other words, features extracted from a local region of the to-be-detected object, such as features extracted from an edge, a corner, a point, a line, a curve, and a region of a special attribute of the to-be-detected object. For example, when the to-be-detected object is the face, the global feature may be a size, a shape, a position, and the like of facial features on the face, and the local feature may be distribution of facial muscles, a shape change of the facial features, and the like under different expressions. Herein, the global feature is a low-layer visual feature at a pixel level. Therefore, the global feature has characteristics such as good invariance, simple calculation, and intuitive representation, but is not applicable to cases of object aliasing and obstruction. The local image feature has characteristics of being rich in number in an image and a small inter-feature correlation degree. In the cases of object aliasing and obstruction, disappearance of some features does not affect detection and matching of other features. In this way, the global feature extraction and the local feature extraction are performed on the to-be-detected object, to acquire richer and more accurate features of the to-be-detected object, thereby improving accuracy of a keypoint detection result.

Next, a process of determining the local feature of each vertex based on the vertex feature and the connection relationship between the vertices, and a process of determining the local feature of the to-be-detected object based on the local feature of each vertex are described separately.

For the process of determining the local feature of each vertex based on the vertex feature and the connection relationship between the vertices, refer to FIG. 5 herein. FIG. 5 is a schematic flowchart of determining the local feature of each vertex according to an embodiment of the present disclosure. Based on FIG. 5, the process of determining the local feature of each vertex based on the vertex feature and the connection relationship between the vertices is implemented through operation 1031 to operation 1033. With reference to FIG. 5, the following processing is performed for each vertex.

At 1031: Determine the vertex as a reference vertex, and determine a vertex feature of the reference vertex and a vertex feature of another vertex based on a vertex feature of each vertex in a three-dimensional mesh, the another vertex being any vertex other than the reference vertex.

For example, the quantity of vertices in the three-dimensional mesh is N, a feature of each vertex is h, and a dimension is F. That is,

$$h = \{h_1, h_2, \ldots, h_N\}, h \in R^F \qquad \text{Formula (1)}.$$

A vertex i is used as a reference node, and $h_i$ is a vector with a size of F, that is, a feature of the reference node i. A vertex j is another vertex, and $h_j$ is a vector with a size of F, that is, a feature of the another node j. There is an edge connection relationship between the vertex i and the vertex j.

At 1032: Determine a correlation value between the reference vertex and the another vertex based on the vertex feature of the reference vertex, the vertex feature of the another vertex, and the connection relationship between the vertices, the correlation value indicates a correlation degree between the reference vertex and the another vertex.

In some embodiments, a process of determining the correlation value between the reference vertex and the another vertex based on the vertex feature of the reference vertex, the vertex feature of the another vertex, and the connection relationship between the vertices may be: determining the correlation degree between the reference vertex and the another vertex by using an attention mechanism based on the vertex feature of the reference vertex, the vertex feature of the another vertex, and the connection relationship between the vertices. The correlation degree is an indicator for measuring correlation strength between the reference vertex and the another vertex, and a magnitude of the correlation degree may be calculated by using the following formula:

$$e_{ij} = Attention\left(Wh_i, Wh_j\right) \qquad \text{Formula (2)}.$$

W is a weight matrix with a size of F×F, and $h_i$ is a vertex feature of a reference vertex i, $h_j$ is a vertex feature of another vertex j, attention indicates processing by using an attention mechanism, and $e_{ij}$ indicates a correlation degree between the reference vertex and the another vertex.

**In** some other embodiments, a process of determining the correlation value between the reference vertex and the another vertex based on the vertex feature of the reference vertex, the vertex feature of the another vertex, and the connection relationship between the vertices may be: determining, based on the connection relationship between the vertices, the reference vertex and another vertex that are connected to each other; performing similarity matching on the reference vertex and the corresponding another vertex based on the vertex feature of the reference vertex and a vertex feature of the another vertex that is connected to the reference vertex, to obtain a similarity between the reference vertex and the corresponding another vertex (a corresponding similarity is obtained for each of the another vertex); and determining the similarity as the correlation degree between the reference vertex and the corresponding another vertex.

Then, normalization processing is performed on the correlation degree, to obtain the correlation value between the reference vertex and the another vertex. That is,

$$\alpha_{ij} = Soft\max_j\left(e_{ij}\right) = \frac{\exp\left(e_{ij}\right)}{\sum_{q \in N_i} \exp\left(e_{iq}\right)} \qquad \text{Formula (3)}.$$

$Soft\max_j$ indicates that normalization processing is used, $\alpha_{ij}$ indicates a correlation value between nodes i and j, exp indicates an exponential function with a natural constant e as the base, $N_i$ indicates a domain formed by all other nodes that have a connection relationship with the reference node i, and q represents any vertex in the domain.

For example, referring to FIG. 6, FIG. 6 is a schematic diagram of determining the correlation degree between the reference vertex and the another vertex by using the attention mechanism according to an embodiment of the present disclosure. Based on FIG. 6, $\alpha_{ij}$ indicated by 601 indicates the correlation value between nodes i and j, $Wh_i$ in a dashed box 602 indicates the corresponding vertex feature of the reference vertex i, $Wh_j$ in a dashed box 603 indicates the vertex feature corresponding to the another vertex j, and a is a weight vector. After determining of the correlation degree between the reference vertex and the another vertex based on $Wh_i$ and $Wh_j$, $Soft\max_j$ processing, namely, the normalization processing, is performed on the correlation degree, to obtain the correlation value between the reference vertex and the another vertex.

Herein, a process of determining the correlation degree between the reference vertex and the another vertex by using the attention mechanism herein may specifically be: splicing the features $Wh_i$ and $Wh_j$ of the vertices i and j, calculating an inner product based on a feature obtained through splicing and a weight vector a with a dimension of 2F, and obtaining the correlation value between the reference vertex and the another vertex through an activation function. That is,

$$\alpha_{ij} = Soft\max_{j}\left(e_{ij}\right) = \frac{\exp\left(LeakyReLU\left(a^{T}\left[Wh_{i}\left\|Wh_{j}\right]\right)\right)\right)}{\sum_{q\in N_{i}}\exp\left(LeakyReLU\left(a^{T}\left[Wh_{i}\left\|Wh_{q}\right]\right)\right)\right)} \qquad \text{Formula (4).}$$

$N_{i}$ indicates a domain formed by all other nodes that have a connection relationship with a reference node i, q represents any vertex in the domain, $Wh_{i}\|Wh_{j}$ indicates a spliced feature obtained by splicing features $Wh_{i}$ and $Wh_{j}$ of vertices i and j, exp indicates an exponential function with a natural constant e as the base, LeakyReLU is a non-linear activation function, and a is a weight vector with a size of 2F.

For a method for determining the correlation degree, the correlation degree between the reference vertex and the another vertex may alternatively be directly calculated based on the vertex feature of the reference vertex, the vertex feature of the another vertex, and the connection relationship between the vertices. There are a plurality of methods for calculating the correlation degree, such as a Pearson correlation coefficient and a Spearman's rank correlation coefficient.

At 1033: Determine a local feature of the reference vertex based on the correlation value and the vertex feature of the another vertex.

During actual implementation, after the correlation value is obtained, when a quantity of other vertices is one, a process of determining the local feature of the reference vertex based on the correlation value and the vertex feature of the another vertex may be: performing multiplication on the correlation value and the vertex feature of the another vertex, to obtain a multiplication result; and determining the local feature of the reference vertex based on the multiplication result. That is,

$$h_{i}^{`} = \sigma\alpha_{ij}Wh_{j} \qquad \text{Formula (5).}$$

$\sigma$ is an activation function, $\alpha_{ij}$ is a correlation value between a reference vertex i and another vertex j, $Wh_{j}$ indicates a vertex feature corresponding to the another vertex j, and $h_{i}'$ is a local feature of the reference vertex.

When a quantity of other vertices is more than one, a process of determining the local feature of the reference vertex based on the correlation value and the vertex feature of the another vertex may be: performing, for each of the other vertices, multiplication on the correlation value and a vertex feature of the another corresponding vertex, to obtain a multiplication result of the another vertex; performing cumulative summation on multiplication results of the other vertices, to obtain a summation result; and determining the local feature of the reference vertex based on the summation result. That is,

$$h_{i}^{`} = \sigma\left(\sum_{j\in N_{i}}\alpha_{ij}Wh_{j}\right) \qquad \text{Formula (6).}$$

$\sigma$ is an activation function, $\alpha_{ij}$ is a correlation value between a reference vertex i and another vertex j, $Wh_{j}$ indicates a vertex feature corresponding to the another vertex j, and $N_{i}$ indicates a domain formed by all other nodes that have a connection relationship with the reference node i.

A process of determining the local feature of the to-be-detected object based on the local feature of each vertex specifically includes: performing feature fusion on the local feature of each vertex based on the local feature of each vertex, to obtain a fused feature; and using the fused feature as the local feature of the to-be-detected object.

At 104: Perform detection on a keypoint of the to-be-detected object based on the vertex feature, the global feature, and the local feature, to obtain a position of the keypoint of the to-be-detected object on the to-be-detected object.

In some embodiments, a process of performing detection on the keypoint of the to-be-detected object based on the vertex feature, the global feature, and the local feature to obtain the position of the keypoint of the to-be-detected object on the to-be-detected object may be: performing feature splicing on the vertex feature, the global feature, and the local feature, to obtain a spliced feature of the to-be-detected object; and performing detection on the keypoint of the to-be-detected object based on the spliced feature, to obtain the position of the keypoint of the to-be-detected object on the to-be-detected object. In this way, the spliced feature includes feature information of the vertex feature, the global feature, and the local feature of the to-be-detected object, and detection is performed on the keypoint of the to-be-detected object based on the spliced feature. Therefore, with reference to the feature information of the vertex feature, the global feature, and the local feature, in other words, through richer feature information, the keypoint of the to-be-detected object is detected, thereby improving accuracy of a keypoint detection result.

In a method based on three-dimensional coordinate regression in the related art, a point around the keypoint may be similar to the keypoint, and therefore, it is difficult to accurately define the keypoint through a pixel position. A three-dimensional heatmap in the present disclosure is a statistical chart that displays a plurality of pieces of data by coloring a color block, in other words, displays each piece of data according to a specified color mapping rule. For example, a large value is represented by a dark color, and a small value is represented by a light color; or a large value is represented by a warm tone, and a small value is represented by a cold tone. In this way, the three-dimensional heatmap is outputted, and a probability that the keypoint belongs to each vertex is displayed, so that local accuracy of a detection result can be better ensured.

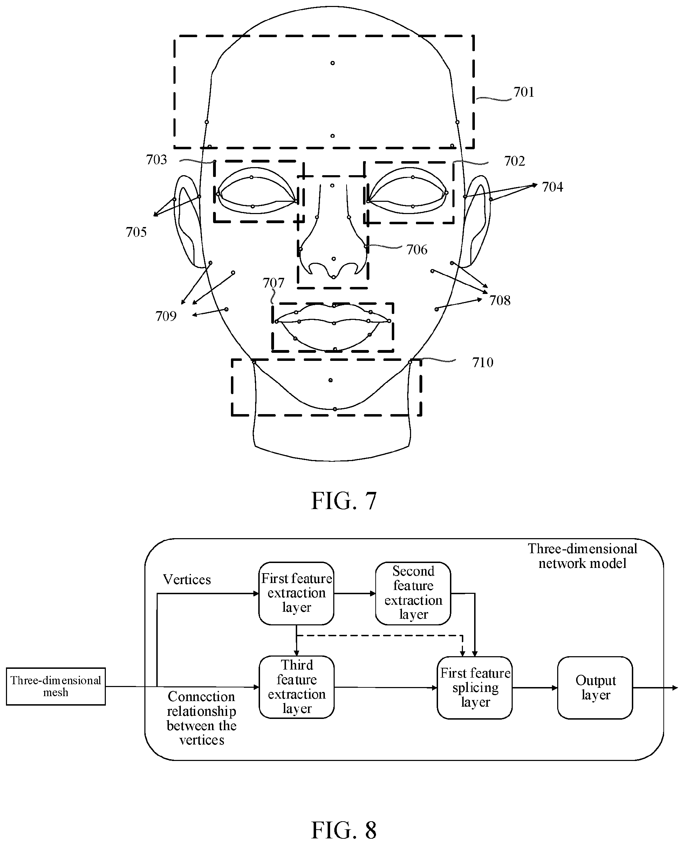

For example, referring to FIG. 7, FIG. 7 is a schematic diagram of positions of keypoints on the to-be-detected object according to an embodiment of the present disclosure. Based on FIG. 7, black points in FIG. 7 are the keypoints. When the to-be-detected object is the face, the positions of the keypoints shown in FIG. 7 may be positions of facial features of the face. Black points in a dashed box 701 are keypoints indicating a position of a frontal head in the face, black points in dashed boxes 702 and 703 are keypoints indicating positions of eyes in the face, black points indicated by 704 and 705 are keypoints indicating positions of ears in the face, black points in a dashed box 706 are keypoints indicating a position of a nose in the face, black points in a dashed box 707 are keypoints indicating a position of a mouth in the face, black points indicated by 708 and 709 are keypoints indicating positions of cheeks in the face, and black points in the dashed box 710 are keypoints indicating a position of a chin in the face. Herein, detection is performed on the positions of the facial features of the to-be-detected object via a output layer based on the vertex feature, the global feature, and the local feature, to obtain a probability of a keypoint being at each vertex in the three-dimensional mesh, namely, a probability that each vertex in the three-dimensional mesh is a keypoint corresponding to a position of each facial feature; a three-dimensional heatmap corresponding to the three-dimensional mesh based on each probability is generated; the position of the keypoint of the to-be-detected object on the to-be-detected object is determined based on the three-dimensional heatmap. To be specific, for the keypoint corresponding to the position of each facial feature, a vertex with a maximum probability is selected from a plurality of probabilities and determined as the corresponding keypoint, to determine the position of the facial feature based on the obtained keypoint.

In some embodiments, the keypoint detection method herein may be further applied to a three-dimensional network model. The three-dimensional network model includes at least a first feature extraction layer, a second feature extraction layer, a third feature extraction layer, and an output layer. Referring to FIG. 8, FIG. 8 is a schematic structural diagram of the three-dimensional network model according to an embodiment of the present disclosure. Based on FIG. 8, a process of performing feature extraction on the vertices of the three-dimensional mesh to obtain a vertex feature of the three-dimensional mesh may be: performing feature extraction on the vertices of the three-dimensional mesh via the first feature extraction layer, to obtain the vertex feature of the three-dimensional mesh. A process of performing global feature extraction on the to-be-detected object based on the vertex feature to obtain a global feature of the to-be-detected object, and performing local feature extraction on the to-be-detected object based on the vertex feature and the connection relationship between the vertices to obtain a local feature of the to-be-detected object may be: performing global feature extraction on the to-be-detected object based on the vertex feature via the second feature extraction layer, to obtain the global feature of the to-be-detected object; and performing local feature extraction on the to-be-detected object based on the vertex feature and the connection relationship between the vertices via the third feature extraction layer, to obtain the local feature of the to-be-detected object. A process of performing detection on the keypoint of the to-be-detected object based on the vertex feature, the global feature, and the local feature, to obtain the position of the keypoint of the to-be-detected object on the to-be-detected object may be: detecting the keypoint of the to-be-detected object via the output layer based on the vertex feature, the global feature, and the local feature, to obtain the position of the keypoint of the to-be-detected object on the to-be-detected object.

In this way, the position of the keypoint on the to-be-detected object is detected through the three-dimensional network model, so that accuracy of the detected position is improved.

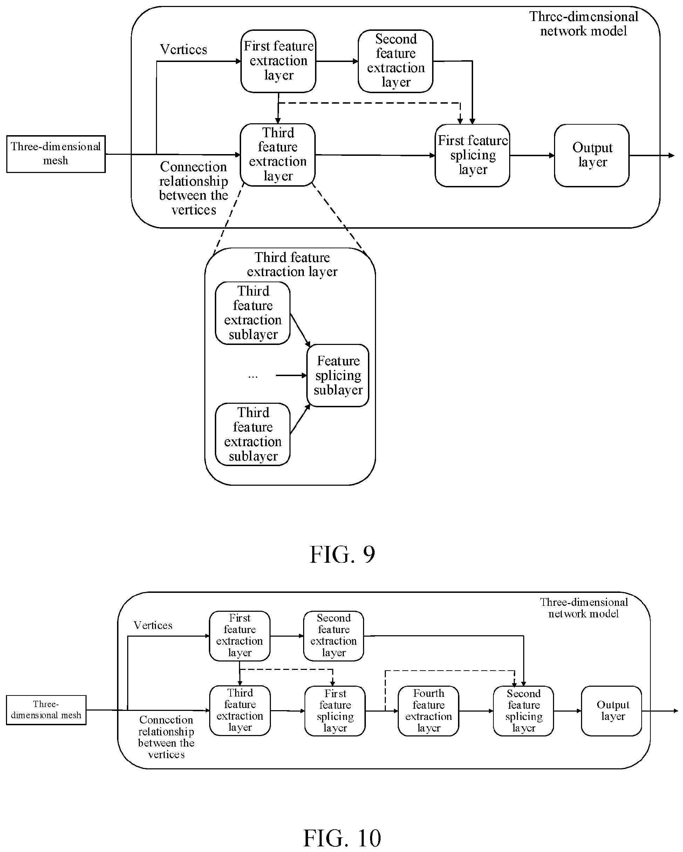

In some embodiments, the third feature extraction layer herein may include at least two third feature extraction sublayers and a feature splicing sublayer. For example, referring to FIG. 9, FIG. 9 is a schematic structural diagram of the third feature extraction layer according to an embodiment of the present disclosure. Based on FIG. 9, a process of determining the local feature of each vertex based on the vertex feature and the connection relationship between vertices via the third feature extraction layer may be: performing the following processing for each of the vertices via each of the third feature extraction sublayers: determining the vertex as the reference vertex, and determining the vertex feature of the reference vertex and the vertex feature of the another vertex based on the vertex feature of each vertex in the three-dimensional mesh; determining the correlation value between the reference vertex and the another vertex based on the vertex feature of the reference vertex, the vertex feature of the another vertex, and the connection relationship between the vertices; determining a local subfeature of the reference vertex based on the correlation value and the vertex feature of the another vertex; and splicing the local subfeature obtained through each third feature extraction sublayer via the feature splicing sublayer, to obtain the local feature of the reference vertex. That is,

$$h_i` = \mathrm{concat}\left(\sigma\left(\sum_{j \in N_i} \alpha_{ij}^k W^k h_j\right)\right) \qquad \text{Formula (7)}.$$

k is a quantity of layers of a third feature extraction sublayer, $N_i$ indicates a domain formed by all other nodes that have a connection relationship with a reference node i, $\sigma$ is an activation function, $\alpha_{ij}$ is a correlation value between the reference vertex i and another vertex j, $Wh_j$ indicates a vertex feature corresponding to the another vertex j, and concat indicates that splicing processing is used.

Herein, a process of determining the correlation value between the reference vertex and the another vertex based on the vertex feature of the reference vertex, the vertex feature of the another vertex, and the connection relationship between the vertices is the same as the foregoing process. In addition, a process of determining the local subfeature of the reference vertex based on the correlation value and the vertex feature of the another vertex is the same as the foregoing process of determining the local feature of the reference vertex based on the correlation value and the vertex feature of the another vertex. Details are not described herein again.

In some embodiments, the three-dimensional network model further includes a first feature splicing layer, a second feature splicing layer, and a fourth feature extraction layer. For example, referring to FIG. 10, FIG. 10 is a schematic structural diagram of the three-dimensional network model according to an embodiment of the present disclosure. Based on FIG. 10, a process of performing detection on the keypoint of the to-be-detected object via the output layer based on the vertex feature, the global feature, and the local feature to obtain the position of the keypoint of the to-be-detected object may be: performing feature splicing on the vertex feature, the global feature, and the local feature via the first feature splicing layer, to obtain the spliced feature of the to-be-detected object; performing local feature extraction on the to-be-detected object based on the spliced feature via the fourth feature extraction layer, to obtain a target local feature of the to-be-detected object; performing feature splicing on the spliced feature, the global feature, and the target local feature via the second feature splicing layer, to obtain a target spliced feature of the to-be-detected object; and performing detection on the keypoint of the to-be-detected object based on the target spliced feature via the output layer, to obtain the position of the keypoint of the to-be-detected object on the to-be-detected object.

The three-dimensional network model may further include a fifth feature extraction layer and a third feature splicing layer. Therefore, local feature extraction is performed on the to-be-detected object based on the target spliced feature via the fifth feature extraction layer, to obtain a second target local feature; then feature splicing is performed on the target spliced feature, the second target local feature, and the global feature via the third feature splicing layer, to obtain a second target spliced feature; and finally detection is performed on the keypoint of the to-be-detected object based on the second target spliced feature via the output layer, to obtain the position of the keypoint of the to-be-detected object on the to-be-detected object. Herein, for a process of determining the local feature and the corresponding spliced feature of the to-be-detected object in the three-dimensional network model, quantities of feature extraction layers and feature splicing layers in the three-dimensional network model may be more than one, and a process of obtaining the final spliced feature via the plurality of feature extraction layers and feature splicing layers is as described in the foregoing. Details are not described in this embodiment of the present disclosure.

Layer structures of the fourth feature extraction layer, the fifth feature extraction layer, and the third feature extraction layer are the same, and processes of processing the features are the same. Layer structures of the second feature splicing layer, the third feature splicing layer, and the first feature splicing layer are the same, and processes of processing the features are also the same. Further feature processing is performed on the spliced feature via the fourth feature extraction layer, to obtain the more accurate target local feature, and the feature splicing is performed on the spliced feature, the global feature, and the obtained target local feature via the second feature splicing layer, to perform detection on the keypoint of the to-be-detected object based on the target spliced feature obtained by feature splicing. Correspondingly, further feature processing is performed on the target spliced feature via the fifth feature extraction layer, to obtain the more accurate second target local feature, and the feature splicing is performed on the target spliced feature, the global feature, and the obtained second target local feature via the third feature splicing layer, to perform detection on the keypoint of the to-be-detected object based on the second target spliced feature obtained by feature splicing.

In this way, feature extraction layers with a same structure and feature splicing layers with a same structure are disposed, and a process of performing local feature extracting and corresponding feature splicing on a to-be-detected object is repeated for a plurality of times, so that accuracy of an extracted feature is improved, thereby improving accuracy of a keypoint detection result.

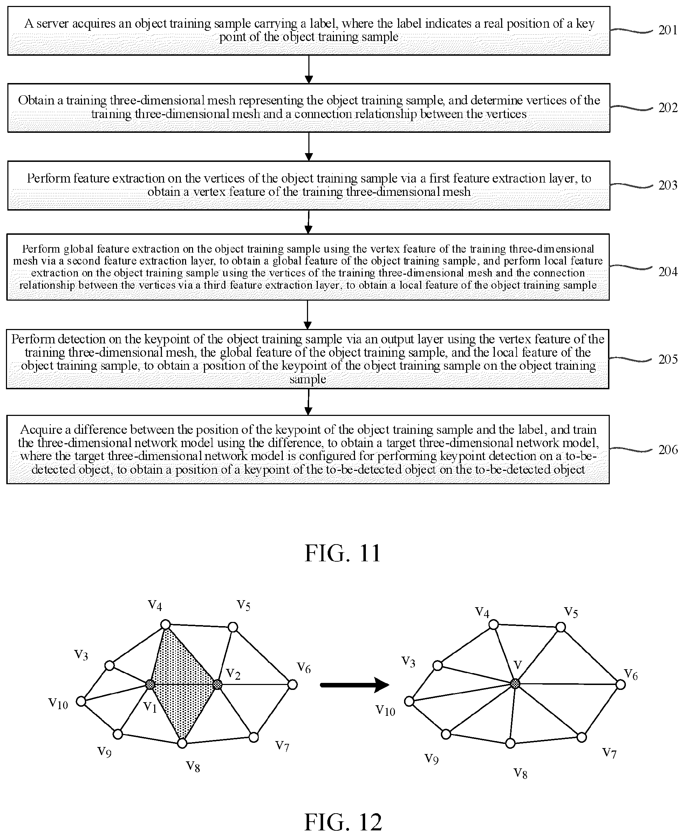

In some embodiments, before detection is performed on the keypoint of the to-be-detected object based on the three-dimensional network model, the three-dimensional network model further needs to be trained, so that the keypoint of the to-be-detected object is detected based on a trained three-dimensional network model. Specifically, referring to FIG. 11, FIG. 11 is a schematic flowchart of a training process of a three-dimensional network model according to an embodiment of the present disclosure. Based on FIG. 11, the training process of the three-dimensional network model may be implemented through the following operations.

At 201: A server acquires an object training sample carrying a label, the label indicating a real position of a keypoint of the object training sample.

At 202: Obtain a training three-dimensional mesh configured for representing the object training sample, and determine vertices of the training three-dimensional mesh and a connection relationship between the vertices.

After the training three-dimensional mesh configured for representing the object training sample is obtained, data enhancement may be further performed on the training three-dimensional mesh, so that the three-dimensional network model is trained through an enhanced training three-dimensional mesh. Specifically, a data enhancement method for the training three-dimensional mesh is divided into patch simplification and patch densification.

In some embodiments, when the patch simplification is performed on the training three-dimensional mesh, an edge optimization manner may be used. To be specific, the smallest edge between the vertices is found each time, and corresponding two vertices are merged into one vertex. Specifically, an edge between any two vertices is acquired, and edges are compared, to select the smallest edge from the edges as a target edge based on a comparison result; and then two vertices corresponding to the target edge are acquired, and the two vertices are merged into one vertex, to obtain the enhanced training three-dimensional mesh. For example, referring to FIG. 12, FIG. 12 is a schematic diagram of patch simplification of a three-dimensional mesh according to an embodiment of the present disclosure. Based on FIG. 12, there are ten vertices $v_1$ to $v_{10}$, and based on the ten vertices, ten sides $v_1v_2$, $v_1v_3$, $v_1v_4$, $v_1v_{10}$, $v_1v_9$, $v_1v_2$, $v_1v_8$, $v_5v_2$, $v_7v_2$, and $v_6v_2$ are formed. An edge between $v_1$ and $v_2$ is the smallest edge, and then the two vertices are merged into one vertex v, to obtain an enhanced training three-dimensional mesh.

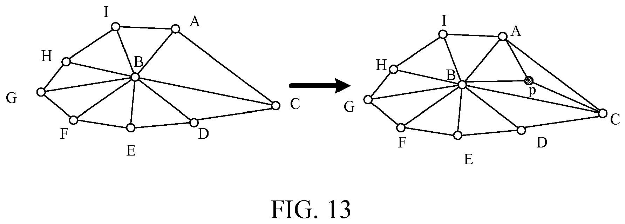

In some other embodiments, when the patch densification is performed on the training three-dimensional mesh, barycentric coordinates are preferentially calculated for a patch with a large area, and then the original triangular patch is divided into three parts based on the barycentric coordinates. Specifically, at least one patch is acquired, and comparison is performed on the patch. Based on a comparison result, a patch with the largest area is selected from the plurality of patches as a target patch. A center of gravity of the target patch and three vertices corresponding to the target patch are determined, and then the original triangular patch is divided into three parts based on barycentric coordinates and the three vertices. For example, referring to FIG. 13, FIG. 13 is a schematic diagram of patch densification of a three-dimensional mesh according to an embodiment of the present disclosure. Based on FIG. 13, there are nine vertices A to I, and based on the nine vertices, eight triangular patches are formed, to be specific, a patch between the vertices A, B, and C, a patch between the vertices A, B, and I, a patch between the vertices H, B, and I, a patch between the vertices H, B, and G, a patch between the vertices F, B, and G, a patch between the vertices F, B, and E, a patch between the vertices D, B, and E, and a patch between the vertices D, B, and C. Herein, the patch between the vertices A, B, and C is a target patch with a largest area. A center of gravity P of the target patch and the corresponding vertices A, B, and C are determined, and then the original target patch is divided into three parts based on P, A, B, and C, to obtain an enhanced training three-dimensional mesh.

Herein, a target quantity of vertices may be preset, to end a data enhancement process of the training three-dimensional mesh. Specifically, in the data enhancement process of the training three-dimensional mesh, a quantity of vertices of the enhanced training three-dimensional mesh is acquired, the quantity of vertices is compared with the preset target quantity of vertices, and the data enhancement of the training three-dimensional mesh is ended based on a comparison result. Herein, when the patch simplification is performed on the training three-dimensional mesh, when the comparison result represents that the quantity of vertices is less than the target quantity of vertices, the data enhancement of the training three-dimensional mesh is ended. When the patch densification is performed on the training three-dimensional mesh, when the comparison result represents that the quantity of vertices is greater than the target quantity of vertices, the data enhancement of the training three-dimensional mesh is ended.

At 203: Perform feature extraction on the vertices of the object training sample via a first feature extraction layer, to obtain a vertex feature of the training three-dimensional mesh.

At 204: Perform global feature extraction on the object training sample based on the vertex feature of the training three-dimensional mesh via a second feature extraction layer, to obtain a global feature of the object training sample, and perform local feature extraction on the object training sample based on the vertices of the training three-dimensional mesh and the connection relationship between the vertices via a third feature extraction layer, to obtain a local feature of the object training sample.

At 205: Perform detection on the keypoint of the object training sample via an output layer based on the vertex feature of the training three-dimensional mesh, the global feature of the object training sample, and the local feature of the object training sample, to obtain a position of the keypoint of the object training sample on the object training sample.

During actual implementation, the three-dimensional network model further includes a first feature splicing layer. Therefore, a process of performing detection on the keypoint of the object training sample via the output layer based on the vertex feature of the training three-dimensional mesh, the global feature of the object training sample, and the local feature of the object training sample, to obtain the position of the keypoint of the object training sample on the object training sample may be: performing feature splicing on the vertex feature of the training three-dimensional mesh, the global feature of the object training sample, and the local feature of the object training sample via the first feature splicing layer, to obtain a spliced feature of the object training sample; and performing detection on the keypoint of the object training sample based on the spliced feature of the object training sample via the output layer, to obtain the position of the keypoint of the object training sample on the object training sample.

At 206: Acquire a difference between the position of the keypoint of the object training sample and the label, and train the three-dimensional network model based on the difference, to obtain a target three-dimensional network model, the target three-dimensional network model being configured for performing keypoint detection on a to-be-detected object, to obtain a position of a keypoint of the to-be-detected object on the to-be-detected object.

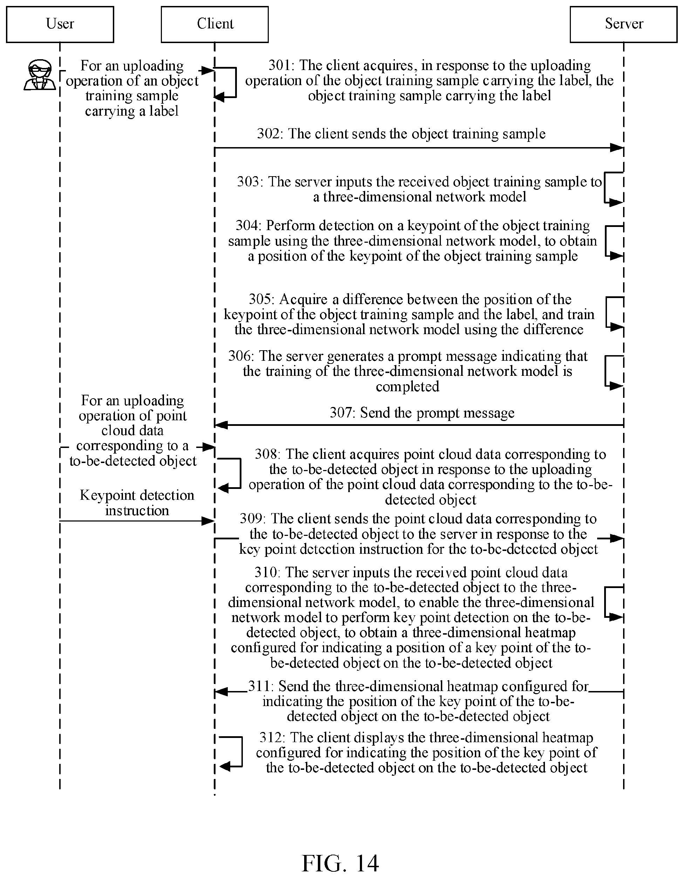

The following continues to describe the keypoint detection method provided in the embodiments of the present disclosure. Referring to FIG. 14, FIG. 14 is a schematic flowchart of a keypoint detection method according to an embodiment of the present disclosure. Based on FIG. 14, the keypoint detection method provided in the embodiments of the present disclosure is cooperatively implemented by a client and a server.

At 301: The client acquires, in response to an uploading operation of an object training sample carrying a label, the object training sample carrying the label.

During actual implementation, the client may be a keypoint detection client disposed in a terminal. A user triggers, based on a human-computer interaction interface of the client, an uploading function in the human-computer interaction interface, to enable the client to present an object selection interface on the human-computer interaction interface. The user locally uploads, based on the object selection interface, the object training sample carrying the label from the terminal, so that the client obtains the uploaded object training sample.

In some embodiments, an object training sample may alternatively be captured by a camera communicatively connected to a terminal. After capturing the object training sample, the camera annotates a label on the object training sample, and then transmits an object training sample carrying the label to the terminal, and the object training sample carrying the label is automatically uploaded to the client by the terminal.

At 302: The client sends the object training sample to the server.

At 303: The server inputs the received object training sample to a three-dimensional network model.

At 304: Perform detection on a keypoint of the object training sample based on the three-dimensional network model, to obtain a position of the keypoint of the object training sample.

At 305: Acquire a difference between the position of the keypoint of the object training sample and the label, and train the three-dimensional network model based on the difference.

During actual implementation, the server completes training of the three-dimensional network model by iterating the foregoing training process until a loss function converges.

At 306: The server generates a prompt message indicating that the training of the three-dimensional network model is completed.

At 307: Send the prompt message to the client.

At 308: The client acquires point cloud data corresponding to a to-be-detected object in response to an uploading operation of the point cloud data corresponding to the to-be-detected object.

During actual implementation, the point cloud data corresponding to the to-be-detected object may be prestored locally in the terminal, may be acquired from the outside world (such as the Internet), or may be collected in real time, for example, collected in real time by using a three-dimensional scanning apparatus such as a three-dimensional scanner.

At 309: The client sends the point cloud data corresponding to the to-be-detected object to the server in response to a keypoint detection instruction for the to-be-detected object.

During actual implementation, the keypoint detection instruction for the to-be-detected object may be automatically generated by the client under a specific trigger condition, where for example, the keypoint detection instruction for the to-be-detected object is automatically generated after the client acquires the point cloud data corresponding to the to-be-detected object; may be sent to the client by another device communicatively connected to the terminal; or may be generated after the user triggers a corresponding determining function item based on the human-computer interaction interface of the client.

At 310: The server inputs the received point cloud data corresponding to the to-be-detected object to the three-dimensional network model, to enable the three-dimensional network model to perform keypoint detection on the to-be-detected object, so as to obtain a three-dimensional heatmap indicating a position of a keypoint of the to-be-detected object on the to-be-detected object.

At 311: Send the three-dimensional heatmap configured for indicating the position of the keypoint of the to-be-detected object on the to-be-detected object to the client.

At 312: The client displays the three-dimensional heatmap configured for indicating the position of the keypoint of the to-be-detected object on the to-be-detected object.

During actual implementation, the client may display the three-dimensional heatmap in the human-computer interaction interface of the client, may store the three-dimensional heatmap locally in the terminal, may send the three-dimensional heatmap to the another device communicatively connected to the terminal, or the like.

Through application of the foregoing embodiments of the present disclosure, a three-dimensional mesh corresponding to a to-be-detected object is obtained, a global feature and a local feature of the to-be-detected object are separately extracted through construction of a dual-path feature extraction layer based on a vertex feature and a connection relationship between vertices obtained by using the three-dimensional mesh, and then a position of a keypoint on the to-be-detected object is obtained based on the vertex feature obtained by using the three-dimensional mesh and the global feature and the local feature obtained through extraction. In this way, richer feature information of the to-be-detected object is extracted via a plurality of feature extraction layers, and then detection is performed on the keypoint of the to-be-detected object based on the rich feature information, so that accuracy of three-dimensional keypoint detection is significantly improved.

An exemplary application of the embodiments of the present disclosure in an actual application scenario is described below.

It is found that keypoint detection of a three-dimensional face character is generally divided into two general types. The first general type is a method based on conventional geometric analysis. Generally, a semantic keypoint of a three-dimensional head model is directly positioned through sharp edge detection, curvature calculation, dihedral angle calculation, normal vector calculation, and some specific geometric rules. For example, it may be assumed that a maximum vertex in a z-direction in a three-dimensional coordinate system is a keypoint at a nose tip. Sharp edge detection is performed below the nose tip, and approximate regions of keypoints at the left and right corners of a mouth may be roughly positioned with reference to a symmetry relationship. The second general type is a method based on deep learning. In this general type of method, basically, a three-dimensional head model is first rendered into a two-dimensional image, and then a two-dimensional convolutional neural network is used to extract a feature, to detect a corresponding keypoint. This type of method may be further divided into different combination methods based on whether to perform multi-view detection and whether to directly regress to a three-dimensional keypoint. For example, a common combination method is to render only a front view of the three-dimensional head model and record a rendering projection relationship, then detect two-dimensional keypoint coordinates on the two-dimensional front view, and finally perform backward projection, based on the known projection relationship, into a three-dimensional space, to obtain final three-dimensional keypoint coordinates. Another combination method is to render a plurality of views (for example, a front view and a side view), and respectively input rendered views into different branches of a neural network model, so that the neural network model directly regresses to three-dimensional keypoint coordinates with reference to features of the two views.

However, for the foregoing first type of method, a conventional keypoint positioning method based on the geometric analysis relies on manually set rules. For example, during sharp edge detection, a threshold needs to be specified. This is an empirical value, and is difficult to be applied to head models of different forms. Therefore, robustness of the method is poor. For the foregoing second type of method, the method based on the two-dimensional convolutional neural network has been successful in a conventional two-dimensional image keypoint detection task. However, there are a plurality of restrictions and disadvantages in directly applying the two-dimensional convolutional neural network to three-dimensional keypoint detection. Specifically, first, a quantity of three-dimensional face models that can be acquired is exceedingly less than that of face images. In other words, a data set is lacking, and therefore it is difficult to make the neural network efficient. Second, in a manner of rendering the three-dimensional face head model into the two-dimensional image, three-dimensional geometric information is inevitably lost. For example, for the front view, information about back of a head is inevitably lacking. If it is necessary to perform detection on a keypoint of the back of the head, when the information is lost, the detection cannot be performed. Third, if a multi-view manner is used to avoid a problem of information loss as much as possible, features are extracted through a multi-branch network, and finally the neural network performs fusion and regression to three-dimensional coordinates. In this way, the neural network needs to learn of intrinsic connections between different views, and there may be a problem of convergence difficulty, thereby increasing training difficulty.

Based on this, the embodiments of the present disclosure provide a keypoint detection method, an apparatus, an electronic device, a computer-readable storage medium, and a computer program product, to effectively resolve a plurality of disadvantages of the foregoing technical methods. Specifically, first, a three-dimensional face model dataset is enhanced through patch simplification and patch densification, so that a problem of lack of the three-dimensional head model dataset is resolved, and supervised deep learning is provided with a guarantee of training data. Second, based on a graph neural network structure, a convolutional neural module is directly applied to a three-dimensional space. This avoids a problem of naturally losing three-dimensional geometric information according to the method of performing detection in a two-dimensional space of rendered views, and also resolves a problem that intrinsic connections of different views are difficult to learn of. Finally, a two-dimensional heatmap in a traditional sense is expanded into a three-dimensional heatmap. In comparison with a manner of directly regressing to three-dimensional coordinates, the three-dimensional heatmap can better ensure local accuracy of a detection result.

Next, the technical solutions of the present disclosure are described from a product side. Herein, the present disclosure provides a three-dimensional face keypoint detection method that is based on a graph neural network structure and a three-dimensional heatmap. This method may be integrated into a character animation tool set, to complete a transformation matching process between different head models in cooperation with a non-rigid wrapping algorithm. A specific product form herein may be a control. In response to a triggering operation for the control, a keypoint detection request carrying related data of a to-be-detected three-dimensional head model is sent to a remote server deployed with the technical solutions of the present disclosure, to acquire a return result. Herein, a manner in which the remote server is deployed facilitates iterative algorithm optimization, and there is no need to update local plug-in code, thereby saving local computer resources.

Next, the technical solutions of the present disclosure are described below on a technical side.

First, a graph convolutional neural network structure in the technical solutions of the present disclosure is described. Specifically, a three-dimensional model (three-dimensional network model) naturally has a graph structural relationship, and in the relationship, pixels are not as compactly and regularly arranged as in a two-dimensional image. Therefore, it is inappropriate to directly use a traditional convolutional neural network, and a classic graph attention network (GAT) is introduced herein. Herein, for a GAT basic network included in the graph convolutional neural network structure, as shown in Formula (1), it is assumed that a graph structure (three-dimensional mesh) includes N nodes (vertices), where a feature vector (vertex feature) of each node is h, and a dimension of each node is F. Then, it is assumed that a node j is a neighbor of a node i (in other words, there is an edge connection relationship between i and j). In this case, importance (a correlation value) of the node j to the node i may be calculated by using an attention mechanism, as shown in Formula (2) and Formula (3). Specifically, a process of calculating the importance of the node j to the node i by using the attention mechanism may be: performing splicing on features Wh, and $Wh_j$ of the nodes i and j; calculating an inner product of the feature obtained through splicing and a weight vector a with a dimension of 2F, as shown in Formula (4); and determining, based on the importance of the node j to the node i, a feature vector (local feature) of the node i, as shown in Formula (6).

During actual application, K feature vectors (local subfeatures) corresponding to the node i may alternatively be obtained in a multi-layer GAT splicing manner, in other words, by using K attention mechanisms, and the K feature vectors are spliced, to obtain a final feature vector (local feature) corresponding to the node i, as shown in Formula (7). In this way, based on a GAT feature of relying on only an edge (connection relationship between vertices) rather than a complete graph structure, flexibility of a keypoint detection process is improved. In addition, an attention mechanism is used, so that different weights can be assigned to different neighbor nodes, thereby improving accuracy of the keypoint detection process.

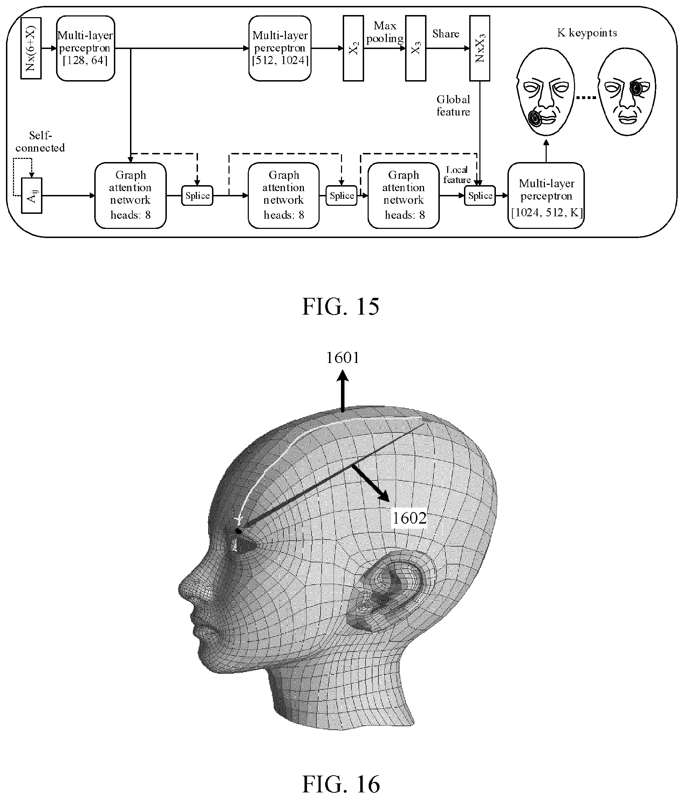

Herein, after descriptions of the graph attention network (GAT), referring to FIG. 15, FIG. 15 is a schematic structural diagram of a graph convolutional neural network according to an embodiment of the present disclosure. Herein, a three-dimensional head model keypoint automatic detection neural network shown in FIG. 15 is constructed based on the GAT. Based on FIG. 15, input data, namely, vertex data is N*(6+X) (vertices of a three-dimensional mesh), N represents a quantity of vertices of a three-dimensional model (three-dimensional mesh), 6 represents dimensions occupied by vertex coordinates and a normal vector, and X includes other characteristics of the vertices of the three-dimensional head model (three-dimensional mesh), including a curvature, texture information, and the like. Herein, these other characteristics may be adjusted based on different data and tasks. Generally, richer input characteristics are more beneficial to learning of the neural network. $A_{ij}$ is a vertex connection relationship matrix (connection relationship between the vertices), and has a size of N*N. A value of $A_{ij}$ is 0 or 1. For example, if two vertices i and j are connected, $A_{ij}$ is 1, or otherwise, is 0.

Based on FIG. 15, a multi-layer perceptron (MLP) represents a plurality of fully-connected perceptual layers. The vertex data (vertices of the three-dimensional mesh) first passes through an MLP module with a hidden layer dimension of [128, 64], to obtain a preliminary hidden layer feature $X_1$ (vertex feature). Then the vertex data is divided into two paths (global feature extraction and local feature extraction). One path continues to pass through an MLP module ([512, 1024]), max pooling is performed on an output feature $X_2$, to acquire global feature information $X_3$, and then the global feature information is shared by all N vertices, to determine a global feature $N \times X_3$. The other path passes through three groups of GAT modules. Each GAT module includes eight layers of attention base networks (heads). Herein, output layers of the three groups of GAT modules are spliced together to determine a local feature. Finally, the two paths of features are spliced and inputted into a final MLP module ([1024, 512, K]), to obtain final three-dimensional heatmap data of N*K (K is a quantity of keypoints), and the data is visualized on the three-dimensional head model, to obtain N three-dimensional heatmaps.

Because characteristics of the GAT module and the MLP module, a fixed quantity N of vertices is not needed in a same network structure. This enables three-dimensional face models with different quantities of vertices to be used as input of the neural network model in both a training stage and an actual use stage, thereby improving applicability of the present disclosure.

Second, the three-dimensional heatmap in the technical solutions of the present disclosure is described. Because a heatmap of a three-dimensional mesh no longer has a structure with compact coordinates of a two-dimensional image, in comparison with a two-dimensional heatmap using a Euclidean distance, the three-dimensional heatmap uses a geodesic distance herein. In this way, on a three-dimensional mesh level, in comparison with a Euclidean distance between two points, verifying a shortest path on a mesh graph structure based on a geodesic distance between two points can better indicates a characteristic of a three-dimensional surface. For example, referring to FIG. 16, FIG. 16 is a comparison diagram of a geodesic distance and a Euclidean distance according to an embodiment of the present disclosure. Based on FIG. 16, a straight line between two vertices as indicated by 1602 is the Euclidean distance, and a curve as indicated by 1601 is the corresponding geodesic distance.

When a graph neural network is trained and put into use, the three-dimensional heatmap outputted by the neural network needs to be further transformed into final three-dimensional keypoint coordinates. Herein, a manner of transforming the conventional two-dimensional heatmap into two-dimensional coordinates includes the following operations: Coordinates of a vertex at which a maximum probability is located are first acquired (referred to as an argmax method). Then softmax probability expectations of a plurality of vertex coordinates are weighted (that is, a soft-argmax method), to obtain final three-dimensional keypoint coordinates. For the present disclosure, considering that a plurality of three-dimensional coordinates are weighted according to the soft-argmax method, a result does not necessarily fall on a three-dimensional mesh plane. Therefore, the argmax method is directly used herein, in other words, coordinates of a vertex at which a maximum probability is located are acquired, to determine final three-dimensional keypoint coordinates.

Finally, the data enhancement method in the present disclosure is described.

Different from a two-dimensional face image and two-dimensional keypoint data, three-dimensional face mesh data is excessively difficult to acquire in a large number. Lack of data is a major problem that plagues supervised neural network learning. A graph neural network can learn sufficient detection capabilities from the dataset only if a dataset is large enough and can cover different face forms. However, a three-dimensional face keypoint dataset is difficult to acquire, a cause of which is shown in the following several aspects. Specifically, first, the three-dimensional face mesh data is produced by the art staff, and a production process is cumbersome. However, generation of a two-dimensional image only needs clicking a camera shutter once. Therefore, in datasets disclosed in either the Internet or academia, two-dimensional face images are rich, and corresponding three-dimensional face data is lacking. Second, for a keypoint detection task, manual annotation needs to be performed on a keypoint in advance (or annotation is implemented through both initial automatic detection by an algorithm and the little number of subsequent manual correction). Two-dimensional keypoint annotation work has been previously performed by the large number of people, and an annotation tool is not complex. Essentially, only a specific pixel in an image needs to be annotated in the work. However, keypoint annotation of a three-dimensional mesh is more difficult. For example, it is difficult for an annotator to confirm a face contour. Therefore, when the three-dimensional data is lacking, it is not possible to develop a corresponding annotation tool based on an existing three-dimensional face head model, to manually annotate a three-dimensional keypoint. Based on this, in the technical solutions of the present disclosure, data enhancement is performed on existing three-dimensional face model data based on patch simplification and patch densification, thereby providing normalized and reasonable training data for the graph neural network.

Herein, the data enhancement method is divided into the patch simplification and the patch densification. For the patch simplification, an edge optimization manner may be used, to be specific, the smallest edge between nodes is found each time, and two nodes corresponding to the smallest edge are merged into one vertex, as shown in FIG. 12. For the patch densification, barycentric coordinates are preferentially calculated for a patch with a large area, and then the original triangular patch is divided into three parts based on the barycentric coordinates, as shown in FIG. 13. Herein, termination of operations of both the patch densification and the patch simplification can be controlled by using a final quantity of target vertices.

In this way, in the present disclosure, a specific keypoint of a three-dimensional game head model is automatically detected, so that an accurate and reliable keypoint basis can be provided for subsequent registration work of the three-dimensional head model. In comparison with a conventional manner of manual annotation and then performing head model registration, according to the present disclosure, excessive manual participation can be avoided, so that keypoint dependent work such as registration of the three-dimensional head model can be automatically completed. This reduces human resources of the art staff, thereby speeding up an entire production process related to animation of a model character.

Further, in the present disclosure, based on supervised deep learning of a graph neural network, a position of the three-dimensional keypoint can be accurately predicted, which is robust. In addition, a forward calculation speed of a deep learning model is extremely fast. An algorithm requires only one second on the whole to complete automatic annotation, while in contrast, a manual manner usually takes several minutes. Therefore, the present disclosure has great practical value in terms of efficiency. In addition, a quantity of inputted vertices of a three-dimensional face model is not limited in the present disclosure. After supervised learning training is performed, the generated deep learning model can be widely applied to tasks of automatic detection of keypoints of three-dimensional head models with different vertex densification degrees, and has strong applicability.

Through application of the foregoing embodiments of the present disclosure, a three-dimensional mesh corresponding to a to-be-detected object is obtained, a global feature and a local feature of the to-be-detected object are separately extracted through construction of a dual-path feature extraction layer based on a vertex feature and a connection relationship between vertices obtained by using the three-dimensional mesh, and then a position of a keypoint on the to-be-detected object is obtained based on the vertex feature obtained by using the three-dimensional mesh and the global feature and the local feature obtained through extraction. In this way, richer feature information of the to-be-detected object is extracted via a plurality of feature extraction layers, and then detection is performed on the keypoint of the to-be-detected object based on the rich feature information, so that accuracy of three-dimensional keypoint detection is significantly improved.

The following continues to describe an exemplary structure in which an implementation of the keypoint detection apparatus 455 provided in the embodiments of the present disclosure is a software module. In some embodiments, as shown in FIG. 2, the software module in the keypoint detection apparatus 455 stored in the memory 450 may include:

an obtaining module 4551, configured to obtain a three-dimensional mesh configured for representing a to-be-detected object, and determine vertices of the three-dimensional mesh and a connection relationship between the vertices;

a first feature extraction module 4552, configured to perform feature extraction on the vertices of the three-dimensional mesh, to obtain a vertex feature of the three-dimensional mesh; and

a second feature extraction module 4553, configured to perform global feature extraction on the to-be-detected object based on the vertex feature, to obtain a global feature of the to-be-detected object, and perform local feature extraction on the to-be-detected object based on the vertex feature and the connection relationship between the vertices, to obtain a local feature of the to-be-detected object; and

an output module 4554, configured to perform detection on a keypoint of the to-be-detected object based on the vertex feature, the global feature, and the local feature, to obtain a position of the keypoint of the to-be-detected object on the to-be-detected object.

In some embodiments, the obtaining module 4551 is further configured to scan the to-be-detected object by using a three-dimensional scanning apparatus, to obtain point cloud data of a geometric surface of the to-be-detected object; and construct the three-dimensional mesh corresponding to the to-be-detected object based on the point cloud data.

In some embodiments, the second feature extraction module 4553 is further configured to determine a local feature of each of the vertices based on the vertex feature and the connection relationship between the vertices; and determine the local feature of the to-be-detected object based on the local feature of each of the vertices.

In some embodiments, the second feature extraction module 4553 is further configured to perform the following processing for each of the vertices: determining the vertex as a reference vertex, and determining a vertex feature of the reference vertex and a vertex feature of another vertex based on a vertex feature of each vertex in the three-dimensional mesh; the another vertex being any vertex other than the reference vertex; determining a correlation value between the reference vertex and the another vertex based on the vertex feature of the reference vertex, the vertex feature of the another vertex, and the connection relationship between the vertices, the correlation value indicates a magnitude of a correlation degree between the reference vertex and the another vertex; and determining a local feature of the reference vertex based on the correlation value and the vertex feature of the another vertex.

In some embodiments, the second feature extraction module 4553 is further configured to determine the correlation degree between the reference vertex and the another vertex by using an attention mechanism based on the vertex feature of the reference vertex, the vertex feature of the another vertex, and the connection relationship between the vertices; and perform normalization processing on the correlation degree, to obtain the correlation value between the reference vertex and the another vertex.

In some embodiments, when a quantity of other vertices is one, the second feature extraction module 4553 is further configured to perform multiplication on the correlation value and the vertex feature of the another vertex, to obtain a multiplication result; and determine the local feature of the reference vertex based on the multiplication result.

In some embodiments, when a quantity of other vertices is more than one, the second feature extraction module 4553 is further configured to perform, for each of the other vertices, multiplication on the correlation value and a vertex feature of the another corresponding vertex, to obtain a multiplication result of the another vertex; perform cumulative summation on multiplication results of the other vertices, to obtain a summation result; and determine the local feature of the reference vertex based on the summation result.

In some embodiments, the second feature extraction module 4553 is further configured to perform feature fusion on the local feature of each of the vertices based on the local feature of each of the vertices, to obtain a fused feature; and use the fused feature as the local feature of the to-be-detected object.

In some embodiments, the output module 4554 is further configured to perform feature splicing on the vertex feature, the global feature, and the local feature, to obtain a spliced feature of the to-be-detected object; and perform detection on the keypoint of the to-be-detected object based on the spliced feature, to obtain the position of the keypoint of the to-be-detected object on the to-be-detected object.

In some embodiments, the output module 4554 is further configured to perform detection on the keypoint of the to-be-detected object based on the vertex feature, the global feature, and the local feature, to obtain a probability of the keypoint being at each of the vertices in the three-dimensional mesh; generate a three-dimensional heatmap corresponding to the three-dimensional mesh based on the probability; and determine the position of the keypoint of the to-be-detected object on the to-be-detected object based on the three-dimensional heatmap.

In some embodiments, the apparatus is used in a three-dimensional network model. The three-dimensional network model includes at least a first feature extraction layer, a second feature extraction layer, a third feature extraction layer, and an output layer. The first feature extraction module 4552 is further configured to perform feature extraction on the vertices of the three-dimensional mesh via the first feature extraction layer, to obtain the vertex feature of the three-dimensional mesh. The second feature extraction module 4553 is further configured to perform global feature extraction on the to-be-detected object based on the vertex feature via the second feature extraction layer, to obtain the global feature of the to-be-detected object, and perform local feature extraction on the to-be-detected object based on the vertex feature and the connection relationship between the vertices via the third feature extraction layer, to obtain the local feature of the to-be-detected object. The output module 4554 is further configured to perform detection on the keypoint of the to-be-detected object via the output layer based on the vertex feature, the global feature, and the local feature, to obtain the position of the keypoint of the to-be-detected object on the to-be-detected object.

In some embodiments, the three-dimensional network model further includes a first feature splicing layer, a second feature splicing layer, and a fourth feature extraction layer. The output module 4554 is further configured to perform feature splicing on the vertex feature, the global feature, and the local feature via the first feature splicing layer, to obtain the spliced feature of the to-be-detected object; perform local feature extraction on the to-be-detected object based on the spliced feature via the fourth feature extraction layer, to obtain a target local feature of the to-be-detected object; perform feature splicing on the spliced feature, the global feature, and the target local feature via the second feature splicing layer, to obtain a target spliced feature of the to-be-detected object; and perform detection on the keypoint of the to-be-detected object based on the target spliced feature via the output layer, to obtain the position of the keypoint of the to-be-detected object on the to-be-detected object.

The following continues to describe an exemplary structure in which an implementation of an apparatus for training a three-dimensional network model provided in the embodiments of the present disclosure is a software module. The three-dimensional network model includes at least a first feature extraction layer, a second feature extraction layer, a third feature extraction layer, and an output layer. The training apparatus includes an acquiring module, an obtaining module, a first feature extraction module, a second feature extraction module, an output module, and an update module.

The acquiring module is configured to acquire an object training sample carrying a label, where the label indicates a real position of a keypoint of the object training sample.

The obtaining module is configured to obtain a training three-dimensional mesh representing the object training sample, and determine vertices of the training three-dimensional mesh and a connection relationship between the vertices.

The first feature extraction module is configured to perform feature extraction on the vertices of the object training sample via the first feature extraction layer, to obtain a vertex feature of the training three-dimensional mesh.

The second feature extraction module is configured to perform global feature extraction on the object training sample based on the vertex feature of the training three-dimensional mesh via the second feature extraction layer, to obtain a global feature of the object training sample, and perform local feature extraction on the object training sample based on the vertices of the training three-dimensional mesh and the connection relationship between the vertices via the third feature extraction layer, to obtain a local feature of the object training sample.

The output module is configured to perform detection on the keypoint of the object training sample via the output layer based on the vertex feature of the training three-dimensional mesh, the global feature of the object training sample, and the local feature of the object training sample, to obtain a position of the keypoint of the object training sample on the object training sample.

The update module is configured to acquire a difference between the position of the keypoint of the object training sample and the label, and train the three-dimensional network model based on the difference, to obtain a target three-dimensional network model, the target three-dimensional network model being configured for performing keypoint detection on a to-be-detected object, to obtain a position of a keypoint of the to-be-detected object on the to-be-detected object.

An embodiment of the present disclosure further provides an electronic device, including:

a memory, configured to store computer-executable instructions; and

a processor, configured to implement, when executing the computer-executable instructions stored in the memory, the keypoint detection method or the method for training a three-dimensional network model in the embodiments of the present disclosure, for example, the keypoint detection method shown in FIG. 3, or the method for training a three-dimensional network model shown in FIG. 11.

An embodiment of the present disclosure provides a computer program product or a computer program. The computer program product or the computer program includes computer-executable instructions. The computer-executable instructions are stored in a computer-readable storage medium. A processor of an electronic device reads the computer-executable instructions from the computer-readable storage medium, and the processor executes the computer-executable instructions, to cause the electronic device to perform the keypoint detection method or the method for training a three-dimensional network model in the embodiments of the present disclosure, for example, the keypoint detection method shown in FIG. 3 or the method for training a three-dimensional network model shown in FIG. 11.

An embodiment of the present disclosure provides a computer-readable storage medium, having computer-executable instructions stored therein. When the computer-executable instructions are executed by a processor, the processor performs the keypoint detection method or the method for training a three-dimensional network model provided in the embodiments of the present disclosure, for example, the keypoint detection method shown in FIG. 3 or the method for training a three-dimensional network model shown in FIG. 11.

In some embodiments, the computer-readable storage medium may be a memory such as an FRAM, a ROM, a PROM, an EPROM, an EEPROM, a flash memory, a magnetic surface memory, a compact disc, or a CD-ROM, or may be various devices including one or any combination of the foregoing memories.

In some embodiments, the computer-executable instruction may be written in any form of programming language (including a compiled or interpreted language, or a declarative or procedural language) in the form of a program, software, a software module, a script, or code, and may be deployed in any form, including being deployed as an independent program or being deployed as a module, a component, a subroutine, or another unit suitable for use in a computing environment.

In an example, the computer-executable instruction may but do not necessarily correspond to a file in a file system, may be stored in a part of a file for storing another program or other data, for example, stored in one or more scripts in a hypertext markup language (HTML) document, in a single file specifically configured for a discussed program, or in a plurality of collaborative files (for example, files storing one or more modules, a subprogram, or a code part).

In an example, the executable instruction may be deployed to be executed on one electronic device, executed on a plurality of electronic devices located at one position, or executed on a plurality of electronic devices distributed at a plurality of positions and interconnected through a communication network.

In conclusion, the embodiments of the present disclosure have the following beneficial effects:

(1) Richer feature information of a to-be-detected object is extracted via a plurality of feature extraction layers, and then detection is performed on a keypoint of the to-be-detected object based on the rich feature information, so that accuracy of three-dimensional keypoint detection is significantly improved.

(2) A GAT feature of relying on only an edge rather than a complete graph structure is used, so that flexibility of a keypoint detection process is improved. In addition, an attention mechanism is used, so that different weights can be assigned to different neighbor nodes, thereby improving accuracy of the keypoint detection process.

(3) A specific keypoint of a three-dimensional game head model is automatically detected, so that an accurate and reliable keypoint basis can be provided for subsequent registration work of the three-dimensional head model. In comparison with a conventional manner of manual annotation and then performing head model registration, according to the present disclosure, excessive manual participation can be avoided, so that keypoint dependent work such as registration of the three-dimensional head model can be automatically completed. This reduces human resources of the art staff, thereby speeding up an entire production process related to animation of a model character.

(4) Based on supervised deep learning of a graph neural network, a position of the three-dimensional keypoint can be accurately predicted, which is robust. In addition, a forward calculation speed of a deep learning model is extremely fast. An algorithm requires only one second on the whole to complete automatic annotation, while in contrast, a manual manner usually takes several minutes. Therefore, the present disclosure has great practical value in terms of efficiency. In addition, a quantity of inputted vertices of a three-dimensional face model is not limited in the present disclosure. After supervised learning training is performed, the generated deep learning model can be widely applied to tasks of automatic detection of keypoints of three-dimensional head models with different vertex densification degrees, and has strong applicability.

The foregoing descriptions are merely the embodiments of the present disclosure, and are not intended to limit the protection scope of the present disclosure. Any modification, equivalent replacement, or improvement made without departing from the spirit and principle of the present disclosure shall fall within the protection scope of the present disclosure.

**Claims**

1. A method for detecting a keypoint of a to-be-detected object, performed by an electronic device, the method comprising:

    obtaining a three-dimensional mesh representing a to-be-detected object, and determining vertices of the three-dimensional mesh and a connection relationship between the vertices;
    performing feature extraction on the vertices of the three-dimensional mesh, to obtain a vertex feature of the three-dimensional mesh;
    performing global feature extraction on the to-be-detected object using the vertex feature, to obtain a global feature of the to-be-detected object;
    performing local feature extraction on the to-be-detected object using the vertex feature and the connection relationship between the vertices, to obtain a local feature of the to-be-detected object; and
    performing detection on a keypoint of the to-be-detected object using the vertex feature, the global feature, and the local feature, to obtain a position of the keypoint of the to-be-detected object on the to-be-detected object.

2. The method of claim 1, wherein obtaining the three-dimensional mesh configured for representing the to-be-detected object comprises:

    scanning the to-be-detected object by using a three-dimensional scanning apparatus, to obtain point cloud data of a geometric surface of the to-be-detected object; and
    constructing the three-dimensional mesh corresponding to the to-be-detected object using the point cloud data.

3. The method of claim 1 or 2, wherein performing the local feature extraction on the to-be-detected object using the vertex feature and the connection relationship between the vertices, to obtain the local feature of the to-be-detected object comprises:

    determining a respective local feature of each of the vertices using the vertex feature and the connection relationship between the vertices; and
    determining the local feature of the to-be-detected object using the respective local feature of each of the vertices.

4. The method of claim 3, wherein determining the respective local feature of each of the vertices using the vertex feature and the connection relationship between the vertices comprises:
    performing the following processing for each of the vertices:

    determining the vertex as a reference vertex, and determining a vertex feature of the reference vertex and a vertex feature of another vertex using a respective vertex feature of each vertex in the three-dimensional mesh, wherein the another vertex is any vertex other than the reference vertex;
    determining a correlation value between the reference vertex and the another vertex using the vertex feature of the reference vertex, the vertex feature of the another vertex, and the connection relationship between the vertices, wherein the correlation value indicates a magnitude of a correlation degree between the reference vertex and the another vertex; and
    determining a local feature of the reference vertex using the correlation value and the vertex feature of the another vertex.

5. The method of claim 4, wherein determining the correlation value between the reference vertex and the another vertex using the vertex feature of the reference vertex, the vertex feature of the another vertex, and the connection relationship between the vertices comprises:

    determining the correlation degree between the reference vertex and the another vertex by using an attention mechanism based on the vertex feature of the reference vertex, the vertex feature of the another vertex, and the connection relationship between the vertices; and
    performing normalization processing on the correlation degree, to obtain the correlation value between the reference vertex and the another vertex.

6. The method of claim 4, wherein when a quantity of other vertices is one, determining the local feature of the reference vertex using the correlation value and the vertex feature of the another vertex comprises:

performing multiplication on the correlation value and the vertex feature of the another vertex, to obtain a multiplication result; and
determining the local feature of the reference vertex using the multiplication result.

7. The method of claim 4, wherein when a quantity of other vertices is more than one, determining the local feature of the reference vertex using the correlation value and the vertex feature of the another vertex comprises:

for each of the other vertices, performing multiplication on the correlation value and a vertex feature of the vertex, to obtain a multiplication result of the vertex;
performing cumulative summation on multiplication results of the other vertices, to obtain a summation result; and
determining the local feature of the reference vertex using the summation result.

8. The method of claim 3, wherein determining the local feature of the to-be-detected object using the respective local feature of each of the vertices comprises:

performing feature fusion on the local features of the vertices using the respective local feature of each of the vertices, to obtain a fused feature; and
determining the fused feature as the local feature of the to-be-detected object.

9. The method of any one of claims 1 to 8, wherein performing detection on the keypoint of the to-be-detected object using the vertex feature, the global feature, and the local feature, to obtain the position of the keypoint of the to-be-detected object on the to-be-detected object comprises:

performing feature splicing on the vertex feature, the global feature, and the local feature, to obtain a spliced feature of the to-be-detected object; and
performing detection on the keypoint of the to-be-detected object using the spliced feature, to obtain the position of the keypoint of the to-be-detected object on the to-be-detected object.

10. The method of any one of claims 1 to 9, wherein performing detection on the keypoint of the to-be-detected object using the vertex feature, the global feature, and the local feature, to obtain the position of the keypoint of the to-be-detected object on the to-be-detected object comprises:

performing detection on the keypoint of the to-be-detected object using the vertex feature, the global feature, and the local feature, to obtain a probability of the keypoint being at each of the vertices in the three-dimensional mesh;
generating a three-dimensional heatmap corresponding to the three-dimensional mesh using the probability; and
determining the position of the keypoint of the to-be-detected object on the to-be-detected object using the three-dimensional heatmap.

11. The method of any one of claims 1 to 10, wherein the method is applied to a three-dimensional network model, the three-dimensional network model comprises at least a first feature extraction layer, a second feature extraction layer, a third feature extraction layer, and an output layer, and
wherein performing feature extraction on the vertices of the three-dimensional mesh, to obtain the vertex feature of the three-dimensional mesh comprises:

performing feature extraction on the vertices of the three-dimensional mesh via the first feature extraction layer, to obtain the vertex feature of the three-dimensional mesh;
wherein performing global feature extraction on the to-be-detected object using the vertex feature, to obtain the global feature of the to-be-detected object, and performing local feature extraction on the to-be-detected object using the vertex feature and the connection relationship between the vertices, to obtain the local feature of the to-be-detected object comprises:

performing global feature extraction on the to-be-detected object using the vertex feature via the second feature extraction layer, to obtain the global feature of the to-be-detected object, and performing local feature extraction on the to-be-detected object using the vertex feature and the connection relationship between the vertices via the third feature extraction layer, to obtain the local feature of the to-be-detected object; and
wherein performing detection on the keypoint of the to-be-detected object using the vertex feature, the global feature, and the local feature, to obtain the position of the keypoint of the to-be-detected object on the to-be-detected object comprises:

performing detection on the keypoint of the to-be-detected object via the output layer using the vertex feature, the global feature, and the local feature, to obtain the position of the keypoint of the to-be-detected object on the to-be-detected object.

12. The method of claim **11,** wherein the three-dimensional network model further comprises a first feature splicing layer, a second feature splicing layer, and a fourth feature extraction layer, and
wherein performing detection on the keypoint of the to-be-detected object via the output layer using the vertex feature, the global feature, and the local feature, to obtain the position of the keypoint of the to-be-detected object on the to-be-detected object comprises:

performing feature splicing on the vertex feature, the global feature, and the local feature via the first feature splicing layer, to obtain the spliced feature of the to-be-detected object;
performing local feature extraction on the to-be-detected object using the spliced feature via the fourth feature extraction layer, to obtain a target local feature of the to-be-detected object;
performing feature splicing on the spliced feature, the global feature, and the target local feature via the second feature splicing layer, to obtain a target spliced feature of the to-be-detected object; and
performing detection on the keypoint of the to-be-detected object using the target spliced feature via the output layer, to obtain the position of the keypoint of the to-be-detected object on the to-be-detected object.

13. A method for training a three-dimensional network model, performed by an electronic device, the three-dimensional network model comprising at least a first feature extraction layer, a second feature extraction layer, a third feature extraction layer, and an output layer, and the method comprising:

acquiring an object training sample carrying a label, wherein the label indicates a real position of a keypoint of the object training sample;
obtaining a training three-dimensional mesh representing the object training sample, and determining vertices of the training three-dimensional mesh and a connection relationship between the vertices;
performing feature extraction on the vertices of the object training sample via the first feature extraction layer, to obtain a vertex feature of the training three-dimensional mesh;
performing global feature extraction on the object training sample using the vertex feature of the training three-dimensional mesh via the second feature extraction layer, to obtain a global feature of the object training sample, and performing local feature extraction on the object training sample using the vertices of the training three-dimensional mesh and the connection relationship between the vertices via the third feature extraction layer, to obtain a local feature of the object training sample;
performing detection on the keypoint of the object training sample via the output layer using the vertex feature of the training three-dimensional mesh, the global feature of the object training sample, and the local feature of the object training sample, to obtain a position of the keypoint of the object training sample on the object training sample; and
acquiring a difference between the position of the keypoint of the object training sample and the label, and training the three-dimensional network model using the difference, to obtain a target three-dimensional network model, wherein the target three-dimensional network model is configured for detecting a keypoint of a to-be-detected object, to obtain a position of the keypoint of the to-be-detected object on the to-be-detected object.

14. An apparatus for detecting a keypoint of a to-be-detected object, comprising:

an obtaining module, configured to: obtain a three-dimensional mesh representing a to-be-detected object, and determine vertices of the three-dimensional mesh and a connection relationship between the vertices;
a first feature extraction module, configured to perform feature extraction on the vertices of the three-dimensional mesh, to obtain a vertex feature of the three-dimensional mesh;
a second feature extraction module, configured to: perform global feature extraction on the to-be-detected object using the vertex feature, to obtain a global feature of the to-be-detected object, and perform local feature extraction on the to-be-detected object using the vertex feature and the connection relationship between the vertices, to obtain a local feature of the to-be-detected object; and
an output module, configured to perform detection on a keypoint of the to-be-detected object using the vertex feature, the global feature, and the local feature, to obtain a position of the keypoint of the to-be-detected object on the to-be-detected object.

15. An apparatus for training a three-dimensional network model, the three-dimensional network model comprising at

EP 4 567 724 A1

least a first feature extraction layer, a second feature extraction layer, a third feature extraction layer, and an output layer, and the apparatus comprising:

an acquiring module, configured to acquire an object training sample carrying a label, wherein the label indicates a real position of a keypoint of the object training sample;
an obtaining module, configured to: obtain a training three-dimensional mesh representing the object training sample, and determine vertices of the training three-dimensional mesh and a connection relationship between the vertices;
a first feature extraction module, configured to perform feature extraction on the vertices of the object training sample via the first feature extraction layer, to obtain a vertex feature of the training three-dimensional mesh;
a second feature extraction module, configured to: perform global feature extraction on the object training sample using the vertex feature of the training three-dimensional mesh via the second feature extraction layer, to obtain a global feature of the object training sample, and perform local feature extraction on the object training sample using the vertices of the training three-dimensional mesh and the connection relationship between the vertices via the third feature extraction layer, to obtain a local feature of the object training sample;
an output module, configured to perform detection on the keypoint of the object training sample via the output layer using the vertex feature of the training three-dimensional mesh, the global feature of the object training sample, and the local feature of the object training sample, to obtain a position of the keypoint of the object training sample on the object training sample; and
an update module, configured to: acquire a difference between the position of the keypoint of the object training sample and the label, and train the three-dimensional network model using the difference, to obtain a target three-dimensional network model, wherein the target three-dimensional network model is configured for detecting a keypoint of a to-be-detected object, to obtain a position of the keypoint of the to-be-detected object on the to-be-detected object.

16. An electronic device, comprising:

a memory, configured to store computer-executable instructions; and
a processor, configured to perform, when executing the computer-executable instructions stored in the memory, the method for detecting a keypoint of a to-be-detected object of any one of claims 1 to 12 or the method for training a three-dimensional network model of claim 13.

17. A computer-readable storage medium having stored therein computer-executable instructions that, when executed by a processor, cause the processor to perform the method for detecting a keypoint of a to-be-detected object of any one of claims 1 to 12 or the method for training a three-dimensional network model of claim 13.

18. A computer program product, comprising a computer program or computer-executable instructions, the computer program or the computer-executable instructions implementing, when executed by a processor, the method for detecting a keypoint of a to-be-detected object of any one of claims 1 to 12 or the method for training a three-dimensional network model of claim 13.

26

Keypoint detection
system 100

Server 200

Network 300

Terminal
400

Client
401

Display
interface
401-1

FIG. 1

Electronic device

Memory 450

| Operating system 451 |
| Network communication module 452 |
| Presentation module 453 |
| Input processing module 454 |

Network
interface 420

Processor 410

Keypoint detection apparatus 455

| Obtaining module 4551 |
| First feature extraction module 4552 |
| Second feature extraction module 4553 |
| Output module 4554 |

440

User
interface 430

Output
apparatus 431

Input
apparatus 432

## FIG. 2

A server obtains a three-dimensional mesh representing a to-be-detected object, and determines vertices of the three-dimensional mesh and a connection relationship between the vertices — 101

Perform feature extraction on the vertices of the three-dimensional mesh, to obtain a vertex feature of the three-dimensional mesh — 102

Perform global feature extraction on the to-be-detected object using the vertex feature, to obtain a global feature of the to-be-detected object, and perform local feature extraction on the to-be-detected object using the vertex feature and the connection relationship between the vertices, to obtain a local feature of the to-be-detected object — 103

Perform detection on a key point of the to-be-detected object using the vertex feature, the global feature, and the local feature, to obtain a position of the key point of the to-be-detected object on the to-be-detected object — 104

## FIG. 3

FIG. 4

Determine a vertex as a reference vertex, and determine a vertex feature of the reference vertex and a vertex feature of another vertex using a respective vertex feature of each vertex in a three-dimensional mesh, the another vertex being any vertex other than the reference vertex ～ 1031

Determine a correlation value between the reference vertex and the another vertex using the vertex feature of the reference vertex, the vertex feature of the another vertex, and a connection relationship between vertices, where the correlation value indicates a magnitude of a correlation degree between the reference vertex and the another vertex ～ 1032

Determine a local feature of the reference vertex using the correlation value and the vertex feature of the another vertex ～ 1033

FIG. 5

FIG. 6

FIG. 7

FIG. 8

FIG. 9

FIG. 10

A server acquires an object training sample carrying a label, where the label indicates a real position of a key point of the object training sample ⟍ 201

Obtain a training three-dimensional mesh representing the object training sample, and determine vertices of the training three-dimensional mesh and a connection relationship between the vertices ⟍ 202

Perform feature extraction on the vertices of the object training sample via a first feature extraction layer, to obtain a vertex feature of the training three-dimensional mesh ⟍ 203

Perform global feature extraction on the object training sample using the vertex feature of the training three-dimensional mesh via a second feature extraction layer, to obtain a global feature of the object training sample, and perform local feature extraction on the object training sample using the vertices of the training three-dimensional mesh and the connection relationship between the vertices via a third feature extraction layer, to obtain a local feature of the object training sample ⟍ 204

Perform detection on the keypoint of the object training sample via an output layer using the vertex feature of the training three-dimensional mesh, the global feature of the object training sample, and the local feature of the object training sample, to obtain a position of the keypoint of the object training sample on the object training sample ⟍ 205

Acquire a difference between the position of the keypoint of the object training sample and the label, and train the three-dimensional network model using the difference, to obtain a target three-dimensional network model, where the target three-dimensional network model is configured for performing keypoint detection on a to-be-detected object, to obtain a position of a keypoint of the to-be-detected object on the to-be-detected object ⟍ 206

FIG. 11

FIG. 12

FIG. 13

| User | Client | Server |
|------|--------|--------|

For an uploading operation of an object training sample carrying a label

301: The client acquires, in response to the uploading operation of the object training sample carrying the label, the object training sample carrying the label

302: The client sends the object training sample

303: The server inputs the received object training sample to a three-dimensional network model

304: Perform detection on a keypoint of the object training sample using the three-dimensional network model, to obtain a position of the keypoint of the object training sample

305: Acquire a difference between the position of the keypoint of the object training sample and the label, and train the three-dimensional network model using the difference

306: The server generates a prompt message indicating that the training of the three-dimensional network model is completed

For an uploading operation of point cloud data corresponding to a to-be-detected object

307: Send the prompt message

308: The client acquires point cloud data corresponding to the to-be-detected object in response to the uploading operation of the point cloud data corresponding to the to-be-detected object

Keypoint detection instruction

309: The client sends the point cloud data corresponding to the to-be-detected object to the server in response to the key point detection instruction for the to-be-detected object

310: The server inputs the received point cloud data corresponding to the to-be-detected object to the three-dimensional network model, to enable the three-dimensional network model to perform key point detection on the to-be-detected object, to obtain a three-dimensional heatmap configured for indicating a position of a key point of the to-be-detected object on the to-be-detected object

311: Send the three-dimensional heatmap configured for indicating the position of the key point of the to-be-detected object on the to-be-detected object

312: The client displays the three-dimensional heatmap configured for indicating the position of the key point of the to-be-detected object on the to-be-detected object

FIG. 14

FIG. 15

FIG. 16

## INTERNATIONAL SEARCH REPORT

| International application No. |
|---|
| **PCT/CN2023/129915** |

**A. CLASSIFICATION OF SUBJECT MATTER**

G06T7/00(2017.01)i

According to International Patent Classification (IPC) or to both national classification and IPC

**B. FIELDS SEARCHED**

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 关键点, 检测, 三维, 网格, 特征, 顶点, 全局, 局部, 相关值, 参考, 拼接, key point, detection, 3D, mesh, feature, vertex, global, local, correlation value, softmax, reference, stitching, fusion

**C. DOCUMENTS CONSIDERED TO BE RELEVANT**

| Category* | Citation of document, with indication, where appropriate, of the relevant passages | Relevant to claim No. |
|---|---|---|
| PX | CN 115578393 A (TENCENT TECHNOLOGY (SHENZHEN) CO., LTD.) 06 January 2023 (2023-01-06) claims 1-15, and description, paragraphs [0029]-[0164] | 1-18 |
| X | CN 112991502 A (TENCENT TECHNOLOGY (SHENZHEN) CO., LTD.) 18 June 2021 (2021-06-18) description, paragraphs [0046]-[0190] | 1-3, 8-11, 13-18 |
| A | CN 115238723 A (XIAMEN HUALIAN ELECTRONICS CORP., LTD.) 25 October 2022 (2022-10-25) entire document | 1-18 |
| A | CN 111179419 A (BEIJING QIYI CENTURY SCIENCE & TECHNOLOGY CO., LTD.) 19 May 2020 (2020-05-19) entire document | 1-18 |
| A | CN 109993819 A (NETEASE (HANGZHOU) NETWORK CO., LTD.) 09 July 2019 (2019-07-09) entire document | 1-18 |

☑ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 January 2024** | **24 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/129915** |

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2021213742 A1 (CONTINENTAL AUTOMOTIVE GMBH) 28 October 2021 (2021-10-28)<br>    entire document | 1-18 |

Form PCT/ISA/210 (second sheet) (July 2022)

## INTERNATIONAL SEARCH REPORT
### Information on patent family members

| International application No. |
|---|
| **PCT/CN2023/129915** |

| Patent document cited in search report | | | Publication date (day/month/year) | Patent family member(s) | | | Publication date (day/month/year) |
|---|---|---|---|---|---|---|---|
| CN | 115578393 | A | 06 January 2023 | None | | | |
| CN | 112991502 | A | 18 June 2021 | None | | | |
| CN | 115238723 | A | 25 October 2022 | None | | | |
| CN | 111179419 | A | 19 May 2020 | None | | | |
| CN | 109993819 | A | 09 July 2019 | None | | | |
| WO | 2021213742 | A1 | 28 October 2021 | EP | 3901817 | A1 | 27 October 2021 |
| | | | | EP | 4139831 | A1 | 01 March 2023 |
| | | | | US | 2023162472 | A1 | 25 May 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211576832